# EUROPEAN PATENT APPLICATION

(11) **EP 4 583 573 A1**
(43) Date of publication of application: **09.07.2025**
(21) Application number: 23870138.7
(22) Date of filing: 31.08.2023
(51) Int. Cl.: H04W 28/06

(54) **DATA PACKET DISCARDING METHOD AND RELATED DEVICE**

(30) Priority: 26.09.2022 CN 202211176858
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Thun, Clemens
(86) International application number: PCT/CN2023/116090
(87) International publication number: WO 2024/066898

(57) **Abstract**

This application provides a data packet discarding method and a related device, and belongs to the field of data processing. The method includes: determining, according to a preset determining manner, whether to discard a protocol data unit set or a data packet included in the protocol data unit set, where a determining basis used in the determining manner includes at least one of a number of lost packets of the protocol data unit set, a packet loss timer of the protocol data unit set, first attribute information corresponding to the protocol data unit set, second attribute information corresponding to the data packet, and a dependency relationship between the protocol data unit set and another protocol data unit set, the attribute information is associated with allowing to be discarded or not allowing to be discarded, and the protocol data unit set includes at least one data packet; and if determining, according to the determining manner, to discard the protocol data unit set or the data packet, discarding the protocol data unit set or the data packet. This method can avoid continued transmission of useless data, and save air interface resources.

## Description

This application claims priority to Chinese Patent Application No. 202211176858.4, filed with the China National Intellectual Property Administration on September 26, 2022 and entitled "DATA PACKET DISCARDING METHOD AND RELATED DEVICE", which is incorporated herein by reference in its entirety.

### TECHNICAL FIELD

This application relates to the field of data processing, and in particular, to a data packet discarding method and a related device.

### BACKGROUND

An extended reality (extended reality, XR) technology means combining reality and virtuality by using a computer to create a human-computer interactive virtual environment, and includes virtual reality (virtual reality, VR), augmented reality (augmented reality, AR), mixed reality (mixed reality, MR), cloud game (cloud game, CG), and the like. A service involved in the XR technology is typically audio or video. Therefore, in an XR scenario, a data stream interacted between a user equipment (user equipment, transmitting end) and a network device is typically an audio data stream or a video data stream. A video service is used as an example. A data unit (such as a frame or a video slice) interacted between a transmitting end device and a network device may include a plurality of internet protocol (Internet Protocol, IP) data packets, and an IP data packet may include at least one protocol data unit set (protocol data unit set, PDU). Therefore, in the video service, the data unit transmitted between the transmitting end device and the network device may actually be regarded as a PDU set (protocol data unit set) including a plurality of PDUs.

During actual data unit transmission, packet loss problems inevitably occur due to various factors. For a data unit transmitted in a form of the protocol data unit set, if one or more protocol data unit sets are discarded, or some PDUs in the protocol data unit set are discarded, a receiving end cannot obtain a complete information unit carried in the protocol data unit set. Even if other remaining protocol data unit sets are obtained, complete information still cannot be obtained. Therefore, when packet loss occurs in some protocol data unit sets, if the receiving end insists on receiving all protocol data unit sets, the complete information cannot be obtained, and resources for transmitting other protocol data unit sets are also wasted.

### SUMMARY

Embodiments of this application provide a data packet discarding method and a related apparatus. Whether to perform packet discarding processing on a protocol data unit set or a data packet included in the protocol data unit set is determined based on at least one of the number of lost packets, a packet loss timer, attribute information, and a dependency relationship corresponding to the protocol data unit set. This method can avoid continued transmission of useless data, and save air interface resources.

According to a first aspect, a data packet discarding method is provided, and is applied to a transmitting end. The method includes:
determining, according to a preset determining manner, whether to discard a protocol data unit set or a data packet included in the protocol data unit set, where a determining basis used in the preset determining manner includes at least one of a number of lost packets corresponding to the protocol data unit set, a packet loss timer of the protocol data unit set, first attribute information corresponding to the protocol data unit set, second attribute information corresponding to the data packet, and a dependency relationship between the protocol data unit set and another protocol data unit set, the attribute information is associated with allowing to be discarded or not allowing to be discarded, and the protocol data unit set includes one or more data packets; and
if determining, according to the preset determining manner, to discard the protocol data unit set or the data packet included in the protocol data unit set, discarding the protocol data unit set or the data packet.

In an implementation, the data packet may be a PDU data packet or an SDU data packet, but this is not limited thereto in this application. The protocol data unit set may be, for example, a set of a plurality of data packets, and may include one or more data packets. For example, the protocol data unit set may correspond to a PDU set, but this is not limited thereto.

In an implementation, the discarding a protocol data unit set or a data packet herein may include: discarding a data packet that is in the protocol data unit set and that is not discarded. The data packet that is not discarded herein may be a data packet that has been received by the transmitting end but is not discarded; or may be a data packet that is in the protocol data unit set and that has not been received. In other words, if it is determined that a data packet in the protocol data unit set needs to be discarded, the data packet in the protocol data unit set may be discarded directly after being received.

In an implementation, allowing to be discarded means that a protocol data unit set or a data packet may allow to be discarded, and does not cause packet discarding processing on the protocol data unit set or the data packet in the protocol data unit set. Not allowing to be discarded means that a protocol data unit set or a data packet does not allow to be discarded, and causes packet lost processing on the protocol data unit set or the data packet in the protocol data unit set if discarded.

In an implementation, that the attribute information is associated with allowing to be discarded or not allowing to be discarded means that a data packet or a protocol data unit set having the attribute information belongs to a type of data packet or protocol data unit that allows to be discarded; or a data packet or a protocol data unit set having the attribute information belongs to a type of data packet or protocol data unit set that does not allow to be discarded. For example, a high priority attribute is associated with not allowing to be discarded. In this case, a packet protocol data unit set with a high priority is a data packet or a protocol data unit set that does not allow to be discarded, and if discarding occurs, a corresponding protocol data unit set or another data packet in the protocol data unit set need to be discarded.

In an implementation, the transmitting end may be a user equipment, but this is not limited thereto.

In an implementation, the determining, according to a preset determining manner, whether to discard a protocol data unit set or a data packet included in the protocol data unit set may alternatively mean determining, according to the preset determining manner, whether the protocol data unit set or the data packet included in the protocol data unit set meets a discarding condition, and when the discarding condition is met, discarding the protocol data unit set or the data packet included in the protocol data unit set.

It should be noted that, in this application, the discarded data packet corresponding to the number of lost packets or the count of the packet loss counter in the determining basis may be a data packet discarded in another manner. The another manner herein means a manner other than the data packet discarding method provided in embodiments of this application, and the discarded data packet includes, for example, a data packet discarded due to a reason such as a network status or a communication status; a data packet discarded due to a discard timer expires; or a data packet discarded when transmission of a data packet or a protocol data unit set is completed. This is not limited in this embodiment of this application. For the discarded data packet in the protocol data unit set described in this application, refer to the foregoing explanation. This is not specifically described below.

According to the method provided in this implementation, whether to perform packet discarding processing on a protocol data packet unit set is determined based on at least one of the number of lost packets, a packet loss timer, attribute information, and a dependency relationship corresponding to the protocol data unit set. This method can avoid continued transmission of useless data, and save air interface resources.

With reference to the first aspect, in some implementations of the first aspect, the first attribute information includes at least one of a sequence number corresponding to the protocol data unit set, a total number of data packets included in the protocol data unit set, an importance level of the protocol data unit set, a priority of the protocol data unit set, and a dependency relationship of the protocol data unit set.

The second attribute information includes at least one of a data packet sequence number corresponding to the data packet, a position of the data packet in the protocol data unit set, an importance level of the data packet, and a priority of the data packet.

In an implementation, the second attribute information of the data packet may further include a discarding type corresponding to the data packet, and the discarding type may be allowing to be discarded or not allowing to be discarded.

With reference to the first aspect, in some implementations of the first aspect, when the determining basis used in the preset determining manner is the number of lost packets corresponding to the protocol data unit set, the method specifically includes:
obtaining a packet loss threshold corresponding to the protocol data unit set;
obtaining the number of lost packets corresponding to the protocol data unit set; and
if the number of lost packets reaches or exceeds the packet loss threshold, discarding the protocol data unit set or the data packet.

In an implementation, the packet loss threshold means a maximum number threshold of data packets that can be discarded in the protocol data unit set. When it is determined that the number of lost packets in the protocol data unit set reaches or exceeds the lost packet threshold, the data packet in the protocol data unit set can be directly discarded.

In an implementation, the packet loss threshold is configured in an acknowledged mode. The acknowledged mode includes receiving, after transmitting a data packet, indication information fed back by a receiving end, where the indication information indicates whether the data packet is successfully transmitted or whether the data packet needs to be retransmitted. The acknowledged mode may be an AM mode, a HARQ transmission mode, or an SN status report, and this is not limited in this application.

In an implementation, the obtaining the number of lost packets does not include a data packet discarded due to successful transmission, or the obtaining the number of lost packets only includes a data packet discarded because the discard timer expires.

In an implementation, when it is determined that the number of lost packets in the protocol data unit set reaches the packet loss threshold, the data packet in the protocol data unit set may be directly discarded. For example, it is assumed that the packet loss threshold is 10. If the number of lost packets in the protocol data unit set reaches 10, in other words, the number of lost packets is equal to the packet loss threshold, then the data packet in the protocol data unit set may be directly discarded.

In an implementation, when it is determined that the number of lost packets in the protocol data unit set exceeds the packet loss threshold, the data packet in the protocol data unit set may be directly discarded. For example, it is assumed that the packet loss threshold is 10. If the number of lost packets in the protocol data unit set increases from 10 to 11, in other words, the number of lost packets is greater than the packet loss threshold, then the data packet in the protocol data unit set may be directly discarded.

With reference to the first aspect, in some implementations of the first aspect, the obtaining a packet loss threshold corresponding to the protocol data unit set specifically includes:
receiving first configuration information sent by a receiving end, where the first configuration information indicates the packet loss threshold, and the receiving end is configured to receive the data packet;
obtaining the packet loss threshold preconfigured by the transmitting end;
receiving, by using a protocol layer of the transmitting end, the packet loss threshold sent by a higher layer of the transmitting end; or
receiving second configuration information sent by a core network, where the second configuration information indicates the packet loss threshold.

The receiving end may be configured to receive the data packet.

In an implementation, the packet loss threshold preconfigured by the transmitting end may be a statically configured packet loss threshold; and the packet loss threshold transmitted by the higher layer of the transmitting end may be a dynamically configured packet loss threshold.

In an implementation, the higher layer may be an application layer or a transport layer.

With reference to the first aspect, in some implementations of the first aspect, when the transmitting end configures the packet loss threshold, the method further includes:
configuring the packet loss threshold at a granularity of a protocol layer entity;
configuring the packet loss threshold at a granularity of a data radio bearer DRB;
configuring the packet loss threshold at a granularity of the protocol data unit set; or
configuring the packet loss threshold at a granularity of a type of the protocol data unit set, where the type of the protocol data unit set is at least one of a priority of the protocol data unit set, an importance level of the protocol data unit set, and a sequence number of the protocol data unit set.

In an implementation, the configuring the packet loss threshold at a granularity of a protocol layer entity may mean configuring the packet loss threshold with each protocol layer entity as an object, in other words, configuring different packet loss thresholds for different protocol layer entities. For example, for PDCP layer entities, a packet loss threshold of 9 is configured for a PDCP layer entity, and a packet loss threshold of 10 is configured for another PDCP layer entity. The configuring the packet loss threshold at a granularity of a data radio bearer DRB may mean configuring the packet loss threshold with each DRB as an object, in other words, configuring different packet loss thresholds for different DRBs. The configuring the packet loss threshold at a granularity of the protocol data unit set may mean configuring the packet loss threshold with each protocol data unit set as an object, where different protocol data unit sets may correspond to different packet loss thresholds. The configuring the packet loss threshold at a granularity of a type of the protocol data unit set may mean configuring the packet loss threshold with a type of each protocol data unit set as an object, where different types of protocol data unit set may correspond to different packet loss thresholds.

With reference to the first aspect, in some implementations of the first aspect, when the determining basis used in the preset determining manner is the number of lost packets corresponding to the protocol data unit set, the method specifically includes:
obtaining a packet loss ratio threshold corresponding to the protocol data unit set;
obtaining the number of lost packets corresponding to the protocol data unit set;
obtaining a packet loss ratio corresponding to the protocol data unit set based on a ratio of the number of lost packets to a total number of data packets included in the protocol data unit set; and
if the packet loss ratio reaches or exceeds the packet loss ratio threshold, discarding the protocol data unit set or the data packet.

Discarding the data packet may specifically mean discarding a data packet in the protocol data unit set.

In an implementation, the packet loss ratio is the ratio of the number of lost packets in the protocol data unit set to the total number of data packets included in the protocol data unit set.

With reference to the first aspect, in some implementations of the first aspect, the obtaining a packet loss ratio threshold corresponding to the protocol data unit set specifically includes:
receiving third configuration information sent by a receiving end, where the third configuration information indicates the packet loss ratio threshold, and the receiving end is configured to receive the data packet;
obtaining the packet loss ratio threshold preconfigured by the transmitting end;
receiving, by using a protocol layer of the transmitting end, the packet loss ratio threshold sent by a higher layer of the transmitting end; or
receiving fourth configuration information sent by a core network, where the fourth configuration information indicates the packet loss ratio threshold.

The data packet received by the receiving end may be a received data packet in a protocol data unit set transmitted by the transmitting end.

In an implementation, the packet loss threshold preconfigured by the transmitting end may be a statically configured packet loss threshold; and the packet loss threshold transmitted by the higher layer of the transmitting end may be a dynamically configured packet loss rate threshold.

In an implementation, the packet loss rate threshold preconfigured by the transmitting end may be a packet loss rate threshold configured when the transmitting end is powered on.

In an implementation, the higher layer may be an application layer or a transport layer.

With reference to the first aspect, in some implementations of the first aspect, when the transmitting end configures the packet loss ratio threshold, the method further includes:
configuring the packet loss ratio threshold at a granularity of a protocol layer entity;
configuring the packet loss ratio threshold at a granularity of a DRB;
configuring the packet loss ratio threshold at a granularity of the protocol data unit set; or
configuring the packet loss ratio threshold at a granularity of a type of the protocol data unit set, where the type of the protocol data unit set is at least one of a priority of the protocol data unit set, an importance level of the protocol data unit set, and a sequence number of the protocol data unit set.

In an implementation, the configuring the packet loss ratio threshold at a granularity of a protocol layer entity may mean configuring the packet loss ratio threshold with each protocol layer as an object, in other words, configuring different packet loss ratio thresholds for different protocol layer entities. For example, for PDCP layer entities, a packet loss ratio threshold of 20% is configured for a PDCP layer entity, and a packet loss ratio threshold of 10% is configured for another PDCP layer entity. The configuring the packet loss ratio threshold at a granularity of a data radio bearer DRB may mean configuring the packet loss ratio threshold with each DRB as an object, in other words, configuring different packet loss ratio thresholds for different DRBs. The configuring the packet loss ratio threshold at a granularity of the protocol data unit set may mean configuring the packet loss ratio threshold with each protocol data unit set as an object, where different protocol data unit sets may correspond to different packet loss ratio thresholds. The configuring the packet loss ratio threshold at a granularity of a type of the protocol data unit set may mean configuring the packet loss ratio threshold with a type of each protocol data unit set as an object, where different types of protocol data unit set may correspond to different packet loss ratio thresholds.

With reference to the first aspect, in some implementations of the first aspect, the obtaining the number of lost packets corresponding to the protocol data unit set specifically includes:
setting a packet loss counter, where the packet loss counter is configured to count a number of discarded data packets in the protocol data unit set;
adding 1 to a count value of the packet loss counter when obtaining discarding of one data packet in the protocol data unit set; and
obtaining the number of lost packets corresponding to the protocol data unit set based on the count value of the packet loss counter.

With reference to the first aspect, in some implementations of the first aspect, when the packet loss counter counts the number of discarded data packets in the protocol data unit set, the method further includes:
skipping, by the packet loss counter, counting a discarded data packet that is successfully transmitted.

It should be understood that the discarded data packet that is successfully transmitted may be a data packet that is discarded by the transmitting end in a buffer after the transmitting end receives a message that is fed back by the receiving end and that indicates successful transmission.

With reference to the first aspect, in some implementations of the first aspect, the method further includes:
releasing or clearing the packet loss counter when discarding the protocol data unit set or the data packet;
releasing or clearing the packet loss counter when the number of lost packets corresponding to the protocol data unit set does not reach or does not exceed the packet loss threshold, and transmission of the protocol data unit set and/or the data packet is completed;
releasing or clearing the packet loss counter when the ratio of the number of lost packets corresponding to the protocol data unit set to the total number of data packets included in the protocol data unit set does not reach or does not exceed the packet loss ratio threshold, and transmission of the protocol data unit set and/or the data packet is completed;
releasing or clearing the packet loss counter when a ratio of the count value of the counter to the total number of data packets included in the protocol data unit set reaches or exceeds the corresponding packet loss ratio threshold; or
releasing or clearing the packet loss counter when the count value of the counter reaches or exceeds the packet loss threshold.

In an implementation, that transmission of the protocol data unit set and/or the data packet is completed may mean: in the acknowledged mode, it is determined that the last data packet (such as an End PDU) has been received or it is determined that all data packets in the protocol data unit set have been received, and transmission of all data packets in the protocol data unit set is completed, where the all data packets whose transmission is completed may include two parts of data packets: (1) data packets whose successful transmission is determined because the transmitting end receives a message fed back by the receiving end; (2) data packets that are discarded when the transmitting end does not receive a feedback message and a timer (discard timer) corresponding to the data packet expires; or in an unacknowledged mode, it is determined that the last data packet in the protocol data unit set is transmitted to a next layer or it is determined that all data packets in the protocol data unit set have been received.

With reference to the first aspect, in some implementations of the first aspect, the method further includes:
setting the packet loss counter when there is a data packet that is successfully transmitted.

In an implementation, the setting the packet loss counter when there is a data packet that is successfully transmitted means configuring the counter in a mode in which there is a data packet whose successful transmission is acknowledged.

With reference to the first aspect, in some implementations of the first aspect, when the determining basis used in the preset determining manner is the packet loss timer of the protocol data unit set, the method specifically includes:
obtaining the packet loss timer corresponding to the protocol data unit set; and
when the packet loss timer expires, discarding the protocol data unit set or the data packet; or
when the packet loss timer expires, if transmission of the protocol data unit set or the data packet is not completed, discarding the protocol data unit set or the data packet.

With reference to the first aspect, in some implementations of the first aspect, the packet loss timer is started when a first data packet in the protocol data unit set is received.

In an implementation, the first data packet in the protocol data unit set may include: a data packet whose sequence number is 1 in the protocol data unit, or a START data packet in the protocol data unit set, such as a data packet having a START identifier.

With reference to the first aspect, in some implementations of the first aspect, the method further includes:
when transmission time of the protocol data unit set exceeds packet loss timing time of the packet loss timer, discarding the protocol data unit set or the data packet.

With reference to the first aspect, in some implementations of the first aspect, that transmission of the protocol data unit set or the data packet is not completed specifically includes:
when the packet loss timer expires, there is a data packet in the protocol data unit set at the transmitting end.

It should be understood that, that there is the data packet at the transmitting end means that the data packet is buffered at the protocol layer of the transmitting end.

In an implementation, that transmission of the protocol data unit set is not completed may include the following cases: (1) The protocol layer entity does not receive the feedback message sent by the receiving end, and therefore, does not discard a relevant data packet, meaning that the receiving end may not receive the data packet, in other words, the transmission of the data packet is not completed; (2) there is still a data packet that is in the protocol layer entity and that is not transmitted to the next layer, which also means that the transmission of the data packet is not completed; and (3) there is a data packet in the protocol data unit set buffered in the protocol layer entity.

With reference to the first aspect, in some implementations of the first aspect, the obtaining the packet loss timer corresponding to the protocol data unit set specifically includes:
receiving fifth configuration information sent by a receiving end, where the fifth configuration information indicates the packet loss timer, and the receiving end is configured to receive the data packet;
obtaining the packet loss timer preconfigured by the transmitting end;
receiving, by using a protocol layer of the transmitting end, the packet loss timer sent by a higher layer of the transmitting end; or
receiving sixth configuration information sent by a core network, where the sixth configuration information indicates the packet loss timer.

In an implementation, the higher layer may be an application layer or a transport layer.

With reference to the first aspect, in some implementations of the first aspect, the method further includes:
releasing or clearing the packet loss timer when discarding the protocol data unit set or the data packet;
releasing or clearing the packet loss timer when the packet loss timer does not expire, and transmission of the protocol data unit set and/or the data packet is completed; or
releasing or clearing the packet loss timer when the packet loss timer expires.

With reference to the first aspect, in some implementations of the first aspect, when the determining basis used in the preset determining manner is the number of lost packets and the packet loss timer corresponding to the protocol data unit set, the method specifically includes:
obtaining a packet loss threshold corresponding to the protocol data unit set and the packet loss timer corresponding to the protocol data unit set;
obtaining the number of lost packets corresponding to the protocol data unit set; and
if the number of lost packets exceeds the packet loss threshold, and/or if transmission of the protocol data unit set or the data packet is not completed when the packet loss timer expires, discarding the protocol data unit set or the data packet; or
if the number of lost packets exceeds the packet loss threshold, and/or if the packet loss timer expires, discarding the protocol data unit set or the data packet.

In an implementation, that transmission of the protocol data unit set or the data packet is not completed specifically includes: when the packet loss timer expires, there is a data packet in the protocol data unit set at the transmitting end.

With reference to the first aspect, in some implementations of the first aspect, that transmission of the protocol data unit set or the data packet is not completed specifically includes:
there is a data packet in the protocol data unit set at the transmitting end.

With reference to the first aspect, in some implementations of the first aspect, when the determining basis used in the preset determining manner is the first attribute information corresponding to the protocol data unit set and/or the second attribute information corresponding to the data packet, the method specifically includes:
when the first attribute information corresponding to the protocol data unit set is associated with not allowing to be discarded, if a protocol data unit set having the first attribute information is discarded, discarding the protocol data unit set or the data packet; or
when the second attribute information corresponding to the data packet is associated with not allowing to be discarded, if a data packet having the second attribute information is discarded, discarding the protocol data unit set or the data packet.

With reference to the first aspect, in some implementations of the first aspect, the method further includes:
obtaining seventh configuration information sent by a receiving end, where the seventh configuration information indicates the first attribute information corresponding to the protocol data unit set and/or the second attribute information corresponding to the data packet, and the receiving end is configured to receive the data packet;
obtaining the first attribute information corresponding to the protocol data unit set and/or the second attribute information corresponding to the data packet that are/is preconfigured by the transmitting end;
receiving, by using a protocol layer of the transmitting end, the first attribute information corresponding to the protocol data unit set and/or the second attribute information corresponding to the data packet that are/is sent by a higher layer of the transmitting end; or
receiving eighth configuration information sent by a core network, where the eighth configuration information indicates the first attribute information corresponding to the protocol data unit set and/or the second attribute information corresponding to the data packet.

With reference to the first aspect, in some implementations of the first aspect, when the determining basis used in the preset determining manner is the dependency relationship between the protocol data unit set and another protocol data unit set, the method specifically includes:
obtaining that there is a dependency relationship between a first protocol data unit set and at least one second protocol data unit set; and
based on the dependency relationship, if obtaining that the second protocol data unit set is discarded, discarding the first protocol data unit set or a data packet included in the first protocol data unit set; or
based on the dependency relationship, if obtaining that a number of discarded second protocol data unit sets reaches a preset threshold, discarding the first protocol data unit set or a data packet included in the first protocol data unit set.

With reference to the first aspect, in some implementations of the first aspect, the obtaining the at least one second protocol data unit set that has the dependency relationship with the first protocol data unit set specifically includes:
receiving ninth configuration information sent by a receiving end, where the ninth configuration information indicates a dependency relationship identifier, and the receiving end is configured to receive the data packet transmitted by the transmitting end;
obtaining a dependency relationship identifier preconfigured by the transmitting end;
receiving, by using a protocol layer of the transmitting end, a dependency relationship identifier sent by a higher layer of the transmitting end; or
receiving tenth configuration information sent by a core network, where the tenth configuration information indicates a dependency relationship identifier, and the dependency relationship identifier indicates another protocol data unit set interdependent with the protocol data unit set.

With reference to the first aspect, in some implementations of the first aspect, the method further includes:
receiving packet loss indication information sent by the receiving end or the higher layer of the transmitting end, where the packet loss indication information indicates the transmitting end to trigger discarding of the protocol data unit set or discarding of the data packet; and
triggering discarding of the protocol data unit set or discarding of the data packet at the protocol layer.

With reference to the first aspect, in some implementations of the first aspect, the if determining, according to the preset determining manner, to discard the protocol data unit set or the data packet included in the protocol data unit set, discarding the protocol data unit set or the data packet included in the protocol data unit set specifically includes:
if the protocol layer of the transmitting end device determines, according to the preset determining manner, to discard the protocol data unit set or the data packet included in the protocol data unit set, discarding the protocol data unit set or the data packet.

With reference to the first aspect, in some implementations of the first aspect, the method further includes:
when a protocol layer entity of the transmitting end device determines to discard the protocol data unit set or the data packet, if the data packet of the protocol data unit set has been transmitted to a next layer corresponding to the protocol layer, sending, by the protocol layer entity, a notification message to a protocol layer entity of the next layer, where the notification message indicates the protocol layer entity of the next layer to discard the data packet.

According to a second aspect, a data packet discarding method is provided, and is applied to a transmitting end. The method includes:
receiving packet loss indication information sent by a receiving end or a higher layer of the transmitting end, where the packet loss indication information indicates discarding of a protocol data unit set or discarding of a data packet; and
triggering discarding of the protocol data unit set or discarding of the data packet in the protocol data unit set at a protocol layer, where the protocol data unit set includes at least one data packet.

In an implementation, the triggering discarding of the protocol data unit set or discarding of the data packet in the protocol data unit set at a protocol layer may mean triggering a packet discarding processing function of the protocol layer. Under the triggering, the protocol layer may perform the method according to any implementation of the first aspect.

According to a third aspect, a data packet discarding method is provided, and is applied to a transmitting end. The method includes:
receiving packet loss indication information sent by a receiving end, where the packet loss indication information indicates discarding of a protocol data unit set or discarding of a data packet; and
triggering a protocol layer to perform the data packet discarding method according to any implementation of the first aspect.

According to a fourth aspect, a data packet discarding method is provided, and is applied to a receiving end. The method includes:
sending configuration information to a transmitting end, so that the transmitting end determines, based on at least one of the configuration information according to a preset determining manner, whether to discard a protocol data unit set or a data packet included in the protocol data unit set, where the configuration information includes at least one of a packet loss threshold, a packet loss ratio threshold, a packet loss timer, first attribute information corresponding to the protocol data unit set, second attribute information corresponding to the data packet, and a dependency relationship identifier.

With reference to the fourth aspect, in some implementations of the fourth aspect, the method further includes:
configuring the configuration information at a granularity of a protocol layer entity;
configuring the configuration information at a granularity of a DRB;
configuring the configuration information at a granularity of the protocol data unit set; or
configuring the configuration information at a granularity of a type of the protocol data unit set, where the type of the protocol data unit set is at least one of a priority of the protocol data unit set, an importance level of the protocol data unit set, and a sequence number of the protocol data unit set.

With reference to the fourth aspect, in some implementations of the fourth aspect, a data structure of the configuration information is a sequence structure.

According to a fifth aspect, a transmitting end device is provided, and the transmitting end device includes:
one or more processors; and
one or more memories, where
the one or more memories store one or more computer programs, the one or more computer programs include instructions, and when the instructions are executed by the one or more processors, the terminal device is enabled to perform the method according to any implementation of the first aspect to the third aspect.

According to a sixth aspect, a communication system is provided, including a transmitting end device and a receiving end device. The transmitting end device is configured to perform any implementation of the first aspect to the third aspect, and the receiving end is configured to perform the method according to any implementation of the fourth aspect.

According to a seventh aspect, a computer-readable storage medium is provided. The computer-readable storage medium stores computer-executable program instructions, and when the computer-executable program instructions are run on a computer, the computer is enabled to perform the method according to any implementation of the first aspect to the fourth aspect.

According to an eighth aspect, a computer program product is provided. The computer program product includes computer program code, and when the computer program code is run on a computer, the computer is enabled to perform the method according to any implementation of the first aspect to the fourth aspect.

### BRIEF DESCRIPTION OF DRAWINGS

FIG. 1 is a schematic diagram of a structure of a protocol data unit set according to an embodiment of this application;
FIG. 2A is a schematic diagram of a structure of a system architecture to which a data packet discarding method is applicable according to an embodiment of this application;
FIG. 2B is a schematic diagram of a structure of a transmitting end device 100 according to an embodiment of this application;
FIG. 3 is a schematic diagram of a protocol data unit set transmission process according to an embodiment of this application;
FIG. 4 is a schematic flowchart of a data packet discarding method according to an embodiment of this application;
FIG. 5 is a schematic flowchart of another data packet discarding method according to an embodiment of this application;
FIG. 6 is a schematic flowchart of still another data packet discarding method according to an embodiment of this application;
FIG. 7 is a schematic flowchart of still another data packet discarding method according to an embodiment of this application;
FIG. 8 is a schematic flowchart of still another data packet discarding method according to an embodiment of this application;
FIG. 9 is a schematic flowchart of still another data packet discarding method according to an embodiment of this application;
FIG. 10 is a schematic diagram of a triggering procedure of discard processing according to a data packet discarding method according to an embodiment of this application; and
FIG. 11 is a schematic flowchart of still another data packet discarding method according to an embodiment of this application.

### DESCRIPTION OF EMBODIMENTS

It should be noted that, terms used in implementations of embodiments of this application are used only to explain specific embodiments of this application, and are not intended to limit this application. In the descriptions of embodiments of this application, unless otherwise stated, "/" means "or". For example, A/B may represent A or B. In this specification, "and/or" is merely an association relationship for describing associated obstacles and represents that three relationships may exist. For example, A and/or B may represent the following three cases: only A exists, both A and B exist, and only B exists. In addition, in the description of embodiments of this application, unless otherwise specified, "a plurality of" means two or more than two, and "at least one" and "one or more" mean one, two, or more than two.

The terms "first" and "second" mentioned below are merely intended for a purpose of description, and shall not be understood as an indication or implication of relative importance or implicit indication of a quantity of indicated technical features. Therefore, features defined with "first" or "second" may explicitly or implicitly include one or more of the features.

Reference to "one embodiment", "some embodiments", or the like described in this specification means that a specific characteristic, structure, or feature described in combination with the embodiment is included in one or more embodiments of this application. Therefore, phrases "in one embodiment", "in some embodiments", "in some other embodiments", "in some additional embodiments", and the like described in different places in this specification do not necessarily refer to the same embodiment, but mean "one or more but not all embodiments", unless otherwise specifically emphasized. The terms "including", "containing", "having", and their variants all mean "including but not limited to", unless otherwise specifically emphasized.

To facilitate understanding of the data packet discarding method provided in this application, concepts or terms that may be involved in the following embodiments are first described.

### 1. Protocol data unit set

According to the definition in SA, a protocol data unit set may be used as a data unit during data transmission, one protocol data unit set includes one or more data packets, each data packet may carry a payload for constituting an information unit, and an application layer of a receiving end may obtain a complete information unit such as information corresponding to a video frame or picture frame based on payloads carried in all PDUs in the protocol data unit set. In an embodiment of this application, the data unit may include a frame and a video slice. The frame may be understood as a carrier for transmitting data, and the video slice may be understood as a data unit of a specific type in a video service. From a perspective of the carrier for transmitting data, in some cases, one protocol data unit set may correspond to one frame; and from a perspective of a type of transmitted data, in some cases, in the video traffic, data carried by one protocol data unit set may correspond to one video slice.

In general, the application layer of the receiving end needs to receive all packets in a protocol data unit set to obtain a complete information unit, and discarding one or more packets may result in the receiving end not being able to obtain the entire information unit. However, in some cases, the application layer of the receiving end may also calculate data of the discarded part based on data of obtained PDUs by using some algorithms, so that even if some (for example, a small number of or less important) PDUs are discarded, the application layer of the receiving end can still recover all or a part of the information unit.

A concept of the PDU set is proposed in the SA, and is defined as follows:
PDU set: A PDU set is composed of one or more PDUs carrying the payload of one unit of information generated at the application level (e.g. a frame or video slice for XRM Services, as used in TR 26.926 [27]). In some implementations all PDUs in a PDU set are needed by the application layer to use the corresponding unit of information. In other implementations, the application layer can still recover parts or all of the information unit, when some PDUs are missing. In other words, one PDU set includes one or more PDUs, and the PDUs carry payloads of an information unit such as a frame or video slice generated at the application layer. In the foregoing definitions, it is described that in some implementations, the application layer needs to receive all PDUs in the PDU set obtain the information unit; or in another implementation, when some PDUs are discarded, the application layer may still recover all or a part of the information unit.

### 2. Attribute information of the protocol data unit set

Various types of attribute information about the protocol data unit set and/or the data packet are defined in the SA, for example, including: a sequence number of the protocol data unit set, a total number of data packets included in the protocol data unit set, an importance level of the protocol data unit set, a priority of the protocol data unit set, a dependency/dependency relationship of the protocol data unit set, a sequence number of the data packet in the protocol data unit set, a position of the data packet in the protocol data unit set (for example, a start packet/an end packet), an importance level of the data packet, a priority of the data packet, and the like.

For example, that the protocol data unit set is a PDU set is used as an example. Attribute information corresponding to the PDU set may be represented, for example, as: (1) a PDU set sequence number (PDU Sequence number, SN); (2) a start PDU/an end PDU in the PDU set (Start/End PDU of the PDU set); (3) a PDU sequence number in the PDU set (PDU SN within a PDU set); (4) a number of PDUs in the PDU set (Number of PDUs within a PDU set); (5) PDU set importance (PDU set importance); or (6) a dependency/dependency relationship of the PDU set (PDU set dependency).

The foregoing attribute information may be configured by the receiving end, or may be configured by a transmitting end, for example, is configured by an application layer, a transport layer, or a higher layer of the transmitting end, or by a core network.

For example, the importance level of the data packet may mean that PDUs in a same protocol data unit set may have different importance levels. In general, importance of the first data packet (namely, the start data packet) in the protocol data unit set is higher than importance of the last data packet (namely, the last or the end data packet).

For example, the dependency of the protocol data unit set may mean that some protocol data unit sets may depend on other protocol data unit sets. For example, when one protocol data unit set corresponds to one video slice, the dependency of the protocol data unit set may be represented as follows: Whether a video slice is useful depends on whether a previous video slice is successfully received. For another example, when one protocol data unit set corresponds to one video slice, the dependency of the protocol data unit set may be represented as follows: Two video slices belong to a same frame, the frame can be correctly decoded only when all video slices in the frame are successful decoded, and in this case, transmission of a subsequent video slice (protocol data unit set) is meaningful only when transmission of a previous video slice (protocol data unit set) is successful.

In addition, relevant QoS requirements are also defined in the SA, including: (1) a protocol data unit set delay budget, which for example, may be represented as a PDU set Delay Budget (PSDB) for a PDU set; and (2) a protocol data unit set error rate, which for example, may be represented as a PDU set Error Rate (PSER) for a PDU set.

With reference to the foregoing descriptions, the protocol data unit collection may be understood as a new transmission form for transmitting XR data streams (or other types of video/audio data streams). In addition to an existing XR data stream transmission manner based on the QoS streams, the protocol data unit set is proposed mainly for reasons in the following two aspects:
Aspect 1: In the current XR topic discussion, XR data streams may include different types of frames, and because importance corresponding to the different types of frames is also different, there may be frames of different importance (for example, an I frames, a P frame, and a B frame) in one XR data stream. Based on the current protocol, an XR data stream is transmitted in a QoS stream, and current QoS processing is performed based on the QoS stream, then frames of different importance transmitted in the QoS stream may undergo the same QoS processing. However, in fact, less important frames do not need the same QoS processing as more important frames. In view of this, there is a need for a data stream transmission manner with a finer granularity, where frames of different importance are transmitted separately.
Aspect 2: For a video streaming service, one data unit (such as one frame or video slice) that an application layer or a transport layer needs to transmit typically includes a plurality of IP packets, and one IP packet may include at least one data packet (such as PDU). Therefore, when a video frame is transmitted, a plurality of data packets are actually transmitted.

As a result, in comprehensive consideration of the feature of the data unit described in Aspect 2 and the need in Aspect 1, the concept of the protocol data unit set is proposed in the SA. A protocol data unit set may be used as a data unit, and may specifically correspond to a frame or a video slice. A protocol data unit set includes a plurality of data packets, each data packet has a sequence number (such as a PDU SN) different from those of other data packets, and payloads carried in the plurality of data packets may constitute an information unit (such as a video frame or a picture). Different protocol data unit sets may be set to different importance levels, a protocol data unit set with a high importance level of may be used, for example, for transmission of a frame with high importance, and a protocol data unit set with a low importance level may be used, for example, for transmission of a frame with low importance. In this way, frames of different importance are transmitted separately for subsequent differential processing on these frames.

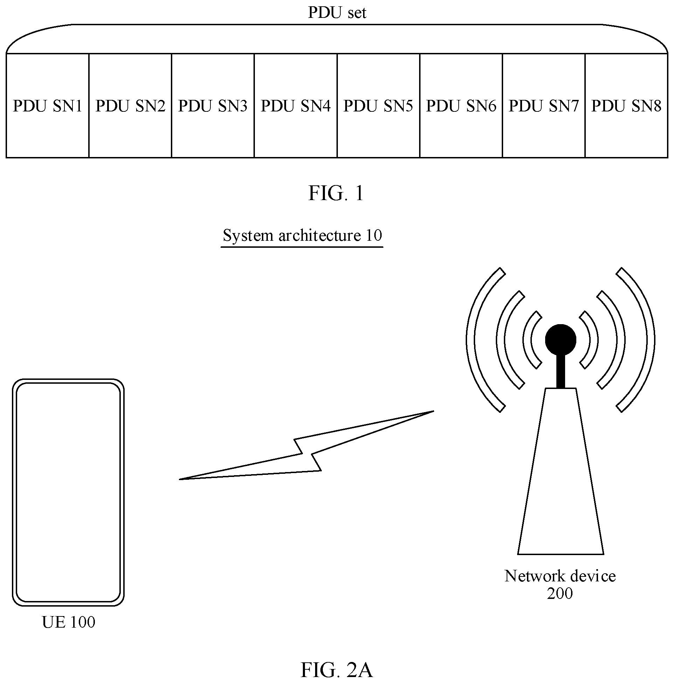

For example, as shown in FIG. 1, a protocol data unit set structure in which the protocol data unit set is a PDU set and the data packet is a PDU is used as an example. The PDU set includes eight PDUs, to be specific, the number of PDUs in the PDU set (Number of PDUs within a PDU set) is 8, and PDU sequence numbers (PDU SNs) of the eight PDUs may be denoted, for example, as a PDU SN1, a PDU SN2, ..., and a PDU SN8 respectively. It should be understood that the number of PDUs included in the protocol data unit set and the representation of the PDU sequence numbers shown in FIG. 1 are merely examples, and embodiments of this application are not limited thereto.

As described in the background, during transmission, the protocol data unit set as a whole or some data packets in the protocol data unit set may be discarded due to a network status or another factor. Different packet loss conditions may have different impacts on the obtaining of information units by the application layer of the receiving end. For example, the packet loss condition may be divided into the following cases:
Case 1: If one or more protocol data unit sets are discarded during transmission, the application layer of the receiving end cannot obtain information units carried in the protocol data unit sets.
Case 2: If some data packets in a protocol data unit set are discarded during transmission, and the application layer of the receiving end cannot obtain an information unit carried in the protocol data unit set based on remaining data packets, the remaining data packets in the protocol data unit set are no longer of value and are useless.
Case 3: If a small number of data packets or data packets with low importance levels in a protocol data unit set are discarded during transmission, but the application layer of the receiving end can calculate data content carried in the discarded data packets based on other received PDUs in the protocol data unit set, then the discarded data packets do not affect the application layer to obtain an information unit carried in the protocol data unit set. However, if the number of discarded PDUs reaches a specific number, or importance levels of the discarded data packets are high, the application layer of the receiving end still cannot obtain the information unit carried in the protocol data unit set.

It should be noted that the discarded data packet in the foregoing three cases and similar cases described below may be a data packet discarded in another manner. The another manner herein means a manner other than the data packet discarding method provided in embodiments of this application, and the discarded data packet includes, for example, a data packet discarded due to a reason such as a network status or a communication status; a data packet discarded due to a discard timer expires; or a data packet discarded when transmission of a data packet or a protocol data unit set is completed. This is not limited in embodiments of this application. For the discarded data packet in the protocol data unit set described in this application, refer to the foregoing explanation. This is not specifically described below.

It can be learned based on the example cases enumerated above that, if data packets in one or more protocol data unit sets are discarded, or one or more protocol data unit sets of a plurality of protocol data unit sets with dependencies are discarded, transmission of the entire protocol data unit set or the plurality of protocol data unit sets may fail. In this case, continuing to transmit remaining data packets or protocol data unit sets only results in a waste of resources and does not help in obtaining information units.

In view of this, this application provides a data packet discarding method. In this method, when a packet loss occurs during transmission of protocol data unit sets, whether to discard a remaining data packet or protocol data unit set is determined through calculation based on information about the number of lost packets, information about time of arrival of the data packet, and the dependency between the protocol data unit sets; and when a determination result is to discard the protocol data unit set or data packet, the protocol data unit set or data packet is discarded. This method can avoid transmission of invalid data packets or protocol data unit sets, thereby saving air interface resources.

The data packet discarding method provided in embodiments of this application may be applied in a scenario, such as an XR scenario, in which transmission of audio stream data, video stream data, or picture data is performed between a transmitting end and a receiving end under a service of audio, video, picture, or the like. The data packet discarding method provided in embodiments of this application may be applied to various types of communication systems, for example, a 5^{th} generation (5^{th} Generation, 5G) mobile communication system such as a new radio (new radio, NR) system. Furthermore, the method may also be applied to a universal mobile telecommunications system (universal mobile telecommunications system, UMTS), a wireless local area network (wireless local area network, WLAN), a wireless fidelity (wireless fidelity, Wi-Fi) system, a wired system, a vehicle to everything (vehicle to everything, V2X) communication system, a device-to-device (device-to-device, D2D) communication system, a 4^{th} generation (4^{th} generation, 4G) mobile communication system, a satellite communication system, and a future communication system, such as a 6^{th} generation (6^{th} Generation, 6G) mobile communication system. This is not limited in this embodiment of this application.

For example, FIG. 2A is a schematic diagram of a structure of a system architecture 10 to which a data packet discarding method is applicable according to an embodiment of this application. The system architecture includes a transmitting end device 100 and a receiving end device 200 (or referred to as a transmitting end and a receiving end).

In some embodiments, the transmitting end device 100 may act as a transmitting end of data packet transmission, and the receiving end device 200 may act as a receiving end of the data packet transmission. In the data packet discarding method provided in embodiments of this application, a discarding processing procedure may be mainly performed by the transmitting end.

In some embodiments, the transmitting end device 100 may be various types of electronic devices, for example, a cell phone, a tablet computer, a wearable device, a vehicle-mounted device, an augmented reality (augmented reality, AR) device/a virtual reality (virtual reality, VR) device, a cloud gaming (cloud gaming, CG) device, a mixed reality (mixed reality, MR) device, a notebook computer, an ultra-mobile personal computer (ultra-mobile personal computer, UMPC), a netbook, a personal digital assistant (personal digital assistant, PDA), and other devices with audio/video and communication functions. A specific type of the transmitting end device is not limited in embodiments of this application.

In some embodiments, the receiving end device 200 may be a network device/core network device, for example, an access device through which the transmitting end device 100 wirelessly accesses a wireless communication system. The receiving end device 200 may be an entity, such as a base station, on a network side configured to transmit or receive signals. The base station may broadly cover or be substituted with various names such as NodeB (NodeB), evolved NodeB (evolved NodeB, eNB), next generation NodeB (next generation NodeB, gNB), relay station, access point, transmission reception point (transmitting and receiving point, TRP), transmission point (transmitting point, TP), master station MeNB, secondary station SeNB, multi-standard radio (MSR) node, home base station, network controller, access node, access point (AP), transmission node, transceiver node, baseband unit (BBU), remote radio unit (RRU), active antenna unit (AAU), radio head (RRH), central unit (CU), distributed unit (DU), and positioning node. The base station may be a macro base station, a micro base station, a relay node, a donor node, or the like. The base station may alternatively be used as a communication module, modem, or chip disposed in the foregoing device or apparatus. The base station may alternatively be a mobile switching center or a device taking on base station functions in device-to-device (D2D), vehicle-to-everything (V2X), or machine-to-machine (M2M) communication. A specific technology and a specific device form that are used by the network device are not limited in embodiments of this application.

A transmission process of a protocol data unit set involved in the data packet discarding method provided in embodiments of this application is described below with reference to the accompanying drawings.

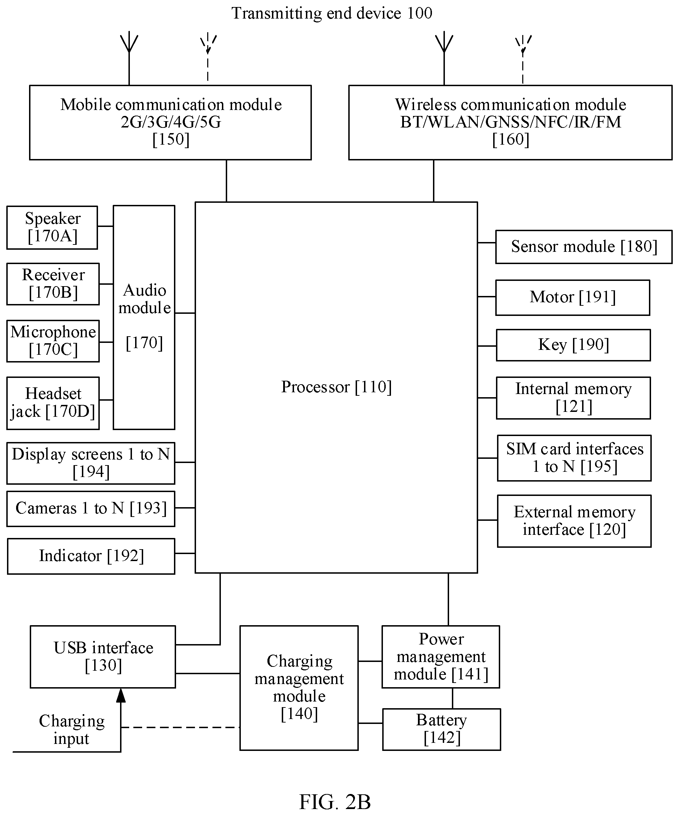

For example, FIG. 2B is a schematic diagram of a structure of a transmitting end device 100 according to an embodiment of this application.

The transmitting end device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like.

It may be understood that an example structure in this embodiment of this application does not constitute a specific limitation on the transmitting end device 100. In some other embodiments of this application, the transmitting end device 100 may include more or fewer components than those shown in the figure, or some components may be combined, or some components may be divided, or different component arrangements may be used. The components shown in the figure may be implemented by hardware, software, or a combination of software and hardware. In addition, an interface connection relationship between the modules illustrated in this embodiment of this application is merely an example for description, and does not constitute a limitation on a structure of the transmitting end device 100. In some other embodiments of this application, the transmitting end device 100 may alternatively use an interface connection manner different from that in the foregoing embodiment, or use a combination of a plurality of interface connection manners.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the transmitting end device 100. The controller may generate an operation control signal according to instruction operation code and a time-sequence signal, and control fetching and execution of instructions.

A memory may further be disposed in the processor 110, configured to store instructions and data. In some embodiments, the memory in processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

The charging management module 140 is configured to receive charging input from the charger. The power management module 141 is configured to connect the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like. The power management module 141 may further be configured to monitor parameters such as a battery capacity, a quantity of battery cycles, and a battery health status (power leakage and impedance). In some other embodiments, the power management module 141 may alternatively be disposed in the processor 110. In some other embodiments, the power management module 141 and the charging management module 140 may alternatively be disposed in a same component.

A wireless communication function of the transmitting end device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the transmitting end device 100 may be configured to cover a single communication frequency band or a plurality of communication frequency bands. Different antennas may further be multiplexed to improve utilization of the antennas. For example, the antenna 1 may be multiplexed as a diversity antenna of a wireless local area network. In some other embodiments, the antenna may be used in combination with a tuning switch.

The mobile communication module 150 may provide solutions for wireless communication including 2G/3G/4G/5G applied to the transmitting end device 100.

The wireless communication module 160 may provide solutions for wireless communication applied to the transmitting end device 100, including a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave by using the antenna 2 for radiation.

In some embodiments, in the transmitting end device 100, the antenna 1 is coupled to the mobile communication module 150, and the antenna 2 is coupled to the wireless communication module 160, so that the transmitting end device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite-based augmentation systems (SBAS).

The transmitting end device 100 implements a display function by using the GPU, the display screen 194, the application processor, and the like. The display screen 194 is configured to display an image, a video, and the like.

The external memory interface 120 may be configured to connect to an external storage card such as a micro SD card, to extend a storage capability of the transmitting end device 100. The external storage card communicates with the processor 110 through the external memory interface 120, to implement a data storage function, for example, store files such as music and a video into the external storage card.

The internal memory 121 may be configured to store computer-executable program code. The executable program code includes instructions. The internal memory 121 may include a program storage area and a data storage area. The program storage area may store an operating system, an application program needed by at least one function (for example, a sound playback function or an image display function), and the like. The data storage area may store data (such as audio data or an address book) created during use of the transmitting end device 100. In addition, the internal memory 121 may include a high speed random access memory, and may further include a non-volatile memory, such as at least one magnetic disk storage device, a flash memory, or a universal flash storage (universal flash storage, UFS). The processor 110 executes various functional applications and data processing of the transmitting end device 100 by running instructions stored in the internal memory 121 and/or instructions stored in the memory disposed in the processor.

The transmitting end device 100 may use the audio module 170, the speaker 170A, the phone receiver 170B, the microphone 170C, the headset jack 170D, the application processor, and the like to implement an audio function, for example, music playback or sound recording.

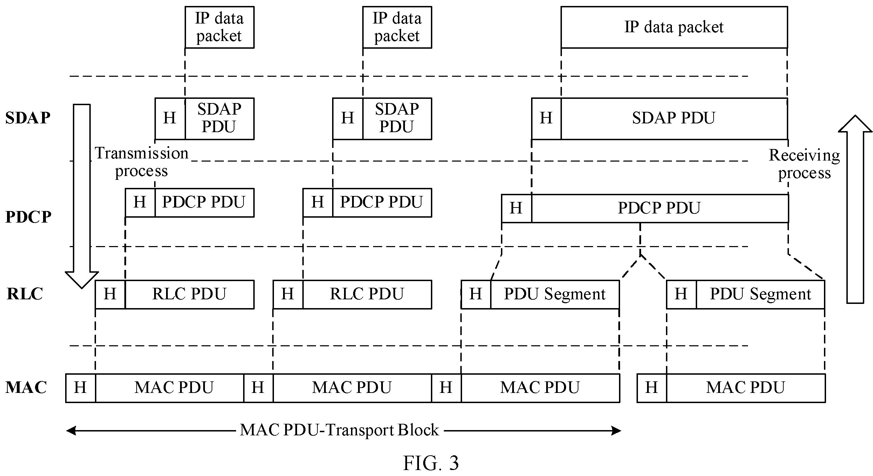

For example, FIG. 3 is a schematic diagram of a protocol data unit set transmission process according to an embodiment of this application.

In some embodiments, a process in which a transmitting end transmits data packets in a protocol data unit set may involve the following layers: a service data adaptation protocol (service data adaptation protocol, SDAP) layer, a packet data convergence protocol (packet data convergence protocol, PDCP) layer, a radio link control (radio link control, RLC) layer, and a medium access control (medium access control, MAC) layer. However, it should be understood that in practice, the layers involved in the process in which a transmitting end transmits data packets in a protocol data unit set are not limited to those described above.

It should be noted that the data packet in the protocol data unit set in this embodiment of this application may be an SDU data packet or a PDU data packet. Payloads carried in the SDU data packet and the PDU data packet may be the same. A relationship between the SDU data packet and the PDU data packet may be understood as that, in the protocol layers, a PDU of a current layer is an SDU of a lower layer, and an SDU of the current layer is a PDU of an upper layer.

In some embodiments, the process in which a transmitting end transmits data packets in a protocol data unit set may include: The SDAP layer obtains an IP packet transmitted by its upper layer (an application layer or a transport layer), performs radio bearer (radio bearer, RB) processing on the IP packet, and generates a data packet including a header (header) and an entity part SDAP SDU (namely, a payload), where the data packet may be marked as an SDAP PDU packet. Then, the SDAP layer transmits the SDAP PDU packet to the PDCP layer. After obtaining the SDAP PDU packet, the PDCP layer processes the data packet according to the PDCP protocol to generate a data packet including a header H and an entity part PDCP PDU, where the data packet may be marked as a PDCP PDU packet. Then, the PDCP layer further transmits the PDCP PDU packet to the RLC layer. After obtaining the PDCP PDU packet, the RLC layer processes the PDCP PDU packet according to the RLC protocol to generate a data packet including a header H and an entity part RLC PDU, where the data packet may be marked as an RLC PDU packet. Then, the RLC layer further transmits the RLC PDU packet to the MAC layer. After obtaining the RLC PDU packet, the MAC layer processes the RLC PDU packet according to the MAC protocol to generate a data packet including a header H and an entity part MAC PDU, where the data packet may be marked as a MAC PDU packet.

According to the foregoing process, the MAC layer can obtain a plurality of MAC PDU data packets corresponding to one data unit, and based on these MAC PDU data packets, the MAC can finally obtain a MAC PDU transport block (MAC PDU transport block) including a plurality of data packets. Then, the MAC layer may transmit the generated MAC PDU transport block to a receiving end by using air interface resources.

In some embodiments, after receiving the protocol data unit, the receiving end may parse the protocol data unit, for example, according to a reverse process of generating the protocol data unit, so that an application layer of the receiving end can obtain, based on a result obtained through parsing, data carried by all PDUs in the protocol data unit set, and then obtain an information unit based on payloads carried by all the PDUs. A specific manner and process in which the receiving end parses the data in the protocol data unit set may be set according to a related protocol or an actual requirement, and embodiments of this application are not limited thereto.

It should be noted that the manner in which the network device parses the protocol data unit set described in the embodiment of FIG. 3 in this application is merely an example. In an actual application, the application layer of the receiving end may obtain the data carried by the PDUs in another manner, and embodiments of this application are not limited thereto. In addition, for specific manners in which the SDAP layer, the PDCP layer, the RLC layer, and the MAC layer process data packets and contents of the processing in the protocol data unit set generation process described in the foregoing embodiment of FIG. 3, refer to the specifications in the related protocol. This is not described in detail in embodiments of this application.

It is to be noted that in the data packet discarding method provided in embodiments of this application, before the protocol data unit set or the PDU is discarded, whether to discard the protocol data unit set or the data packet included in the protocol data unit set may first be determined according to one or more determining manners, and the protocol data unit set or the data packet included in the protocol data unit set may be discarded only if it is determined to discard the protocol data unit set or the data packets included in the protocol data unit set (for example, the determination result is discarding); if it is determined not to discard the protocol data unit set or the data packet included in the protocol data unit set (for example, the determination result is not discarding), the protocol data unit set and the data packet included in the protocol data unit set are not discarded even if there is a discarding phenomenon of the protocol data unit set.

In some embodiments, there may be a plurality of manners of determining whether the protocol data unit set or the data packet needs to be discarded in this application. For example, determining may be performed based on the following determining basis: a number of discarded data packets in the protocol data unit set, a packet loss timer of the protocol data unit set, first attribute information corresponding to the protocol data unit set, second attribute information corresponding to the data packet, and a dependency between the protocol data unit set and another protocol data unit set, where the attribute information is associated with allowing to be discarded or not allowing to be discarded. A specific determining process and discarding process for each determining manner will be described in detail below, and are not described herein in detail.

In some embodiments, the operation of discarding the protocol data unit set or the data packet included in the protocol data unit set may alternatively be performed in the protocol layer when it is determined to discard the protocol data unit set or the data packet included in the protocol data unit set. For example, the protocol layer herein may be specifically any one of an SDAP layer, a PDCP layer, an RLC layer, or a MAC layer. This is not limited in embodiments of this application.

To realize determining whether to discard the protocol data unit set or the data packet included in the protocol data unit set, the protocol layer needs to sense which protocol data unit set (or referred to as sub-QoS flow) the data packet in the protocol layer is in. For example, the manner of realizing the sensing may include: The protocol layer obtains attribute information of a data packet from a higher layer, and then determines, based on the attribute information, to which protocol data unit set the data packet in the protocol layer belongs. The higher layer herein may include an application layer or a transport layer. The attribute information herein may include information defined for the protocol data unit set in the SA, such as: a sequence number of the protocol data unit set, a start data packet and an end data packet in the protocol data unit set, a sequence number of each data packet in the protocol data unit set, an importance level of the data packet, a priority of the data packet, a total number of data packets in the protocol data unit set, an importance level of the protocol data unit set, a priority of the protocol data unit set, and a dependency of the protocol data unit set. The protocol layer may further obtain QoS requirement information such as a latency budget of the protocol data unit set and error tolerance of the protocol data unit set from the higher layer. The QoS requirement information may be requirement information corresponding to a QoS flow for transmitting a protocol data unit set.

In some embodiments, the protocol layer may obtain the attribute information in a plurality of manners, for example: Manner 1: An upper layer of the protocol layer may carry the attribute information in a data packet for transmission to the protocol layer; and Manner 2: An upper layer of the protocol layer may transmit attribute information corresponding to a data packet to the protocol layer when or after transmitting the data packet. A specific manner in which the protocol layer obtains the foregoing attribute information is not limited in this application.

In consideration that in this application, the protocol layer may be any one of the SDAP layer, the PDCP layer, the RLC layer, or the MAC layer, the protocol layer may obtain the attribute information of the protocol data unit set in the following manners:
1. If the SDAP layer performs sensing, an upper layer of the SDAP layer (such as an application layer, a transport layer, or an upper protocol layer of the SDAP layer, which is not limited in this application) may indicate the attribute information corresponding to the protocol data unit set and/or the data packet to the SDAP layer. After obtaining the attribute information of the protocol data unit set and/or the data packet, the SDAP layer may encapsulate the attribute information in an SDAP PDU or inform a next protocol layer of the attribute information.
2. If the PDCP layer performs sensing, the SDAP layer or an upper protocol layer of the PDCP layer may indicate the attribute information corresponding to the protocol data unit set and/or the data packet to the PDCP layer. After obtaining the attribute information of the protocol data unit set and/or the data packet, the PDCP layer may encapsulate the attribute information in a PDCP PDU or inform a next protocol layer of the attribute information.
3. If the RLC layer performs sensing, then the PDCP layer may indicate the RLC layer to receive the attribute information corresponding to the protocol data unit set and/or the data packet. After obtaining the attribute information of the protocol data unit set, the RLC layer may encapsulate the attribute information in an RLC PDU or inform a next protocol layer of the attribute information.

Processes of determining, in different determining manners, whether a protocol data unit set or a data packet needs to be discarded are described below with reference to specific examples. For ease of understanding, that the data packet discarding method provided in embodiments of this application is performed at the PDCP layer of the protocol layer is described below as an example.

For example, according to the data packet discarding method provided in embodiments of this application, a discarding condition may be determined from one or more of the number of lost packets of the protocol data unit set, the packet loss timer of the protocol data unit set, the first attribute information corresponding to the protocol data unit set, the second attribute information corresponding to the data packet, and the dependency between the protocol data unit set and another protocol data unit set. For example, the discarding condition may be specifically determined in the following determining manners:
Determining manner 1: Whether to discard a protocol data unit set or a data packet included in the protocol data unit set is determined based on the number of lost packets of the protocol data unit set.
Determining manner 2: Whether to discard a protocol data unit set or a data packet included in the protocol data unit set is determined based on a packet loss ratio of the protocol data unit set.
Determining manner 3: Whether to discard a protocol data unit set or a data packet included in the protocol data unit set is determined depending on whether the packet loss timer set for the protocol data unit set expires.
Determining manner 4: Whether to discard a protocol data unit set or a data packet included in the protocol data unit set is determined comprehensively based on the number of lost packets of the protocol data unit set and the packet loss timer corresponding to the protocol data unit set.
Determining manner 5: Whether to discard a protocol data unit set or a data packet included in the protocol data unit set is determined depending on whether a data packet having specific attribute information included in the protocol data unit set is discarded, where the specific attribute information is associated with not allowing to be discarded.
Determining manner 6: For a protocol data unit set having a dependency (or referred to as a dependency relationship), whether to discard the protocol data unit set or a data packet included in the protocol data unit set is determined depending on whether a data packet of an associated protocol data unit set is lost or a number of lost packets of the associated protocol data unit set.

For ease of understanding, the following embodiments are described by using an example in which the transmitting end is a user equipment (user equipment, UE) and the receiving end is a network device.

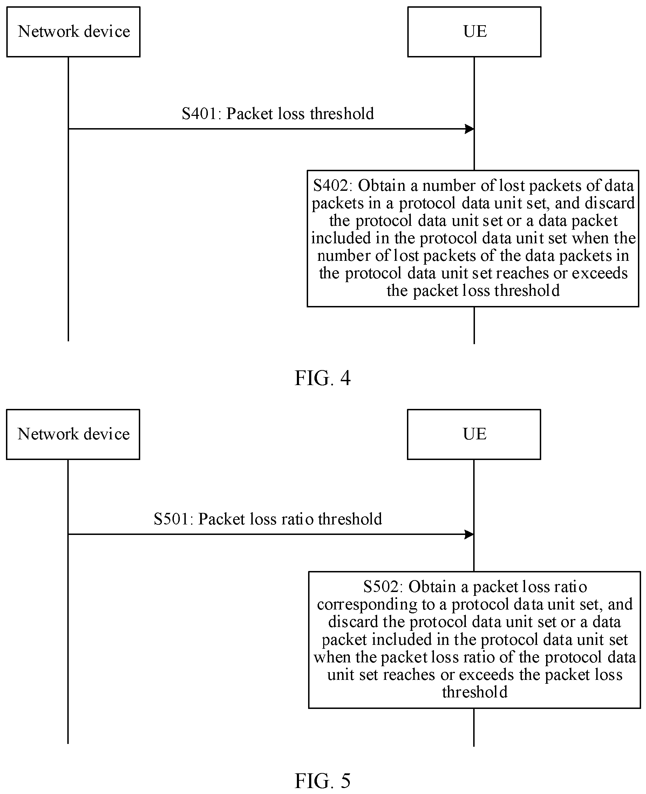

For example, FIG. 4 is a schematic flowchart of a data packet discarding method according to an embodiment of this application. In this procedure, a manner of determining whether to discard a packet may correspond to the foregoing determining manner 1, to be specific, whether to discard a protocol data unit set or a data packet included in the protocol data unit set is determined based on the number of lost packets of the protocol data unit set. The procedure may include the following steps:
S401: A network device sends a packet loss threshold to a UE.

That the network device sends a packet loss threshold to the UE may alternatively be understood as that the network device configures the packet loss threshold to the UE.

The packet loss threshold indicates a maximum threshold of a number data packets allowed to be discarded in the protocol data unit set. The maximum threshold for the number of data packets allowed to be discarded in the protocol data unit set herein means that when the number of discarded data packets in the protocol data unit set is less than the threshold, obtaining, by the application layer of the network device, an information unit carried by the protocol data unit set may not be affected. For example, when the number of discarded data packets is small, the network device may obtain content carried in discarded data packets through calculation based on content of data packets that are not discarded, thereby obtaining the complete information unit. When the number of discarded data packets in the protocol data unit set is greater than or equal to the threshold, the network device may not be able to obtain the complete information unit based on payloads carried in the remaining data packets.

It should be noted that, for the determining manner 1, the embodiment of FIG. 4 in this application provides the process of configuring the packet loss threshold by the network device, but in actual applications, the packet loss threshold may alternatively be configured by a higher layer (such as an application layer or a transport layer) of the UE, or may alternatively be configured by a core network device. This is not limited in this embodiment of this application.

In some embodiments, the packet loss threshold is configured at a granularity of each data radio bearer (data radio bearer, DRB), in other words, a configuration granularity is per DRB, to be specific, the packet loss threshold is included in a DRB configuration, and different DRBs may correspond to different packet loss thresholds. Alternatively, the packet loss threshold is configured at a granularity of each protocol layer entity, to be specific, the packet loss threshold is included in a protocol layer entity configuration, and different types of protocol layer entities (such as an SDAP, a PDCP, and an RLC) may correspond to different packet loss thresholds. Alternatively, the packet loss threshold is configured at a granularity of each protocol data unit set, for example, the configuration granularity is per protocol data unit set, to be specific, the packet loss threshold is included in a protocol data unit set configuration, and different protocol data unit sets may correspond to different packet loss thresholds. Alternatively, the packet loss threshold is configured at a granularity of each type of protocol data unit set, to be specific, the packet loss threshold is included in a type configuration of the protocol data unit set, and different types of protocol data unit sets may correspond to different packet loss thresholds. The configuration granularity of the packet loss threshold is not specifically limited in embodiments of this application.

It should be noted that the foregoing type of the protocol data unit set may be an importance level of the protocol data unit set, a priority of the protocol data unit set, or a sequence number of the protocol data unit set. This is not limited in this embodiment of this application.

In some embodiments, if per protocol data unit set or per type of the per protocol data unit set is used as the configuration granularity of the packet loss threshold, a packet loss threshold separately corresponding to the protocol data unit set or the type of the protocol data unit set may be of a sequence structure.

In some embodiments, a data type of the packet loss threshold configured by the network device may be enumerated or integer.

In some embodiments, the network device may configure the packet loss threshold through radio resource control (Radio Resource Control, RRC) signaling, a MAC control element (MAC Control Element, MAC CE), or downlink control information (downlink control information, DCI).

In some embodiments, the packet loss threshold configured by the network device may be included in a data radio bearer (data radio bearer, DRB) or a protocol layer entity configuration.

S402: Obtain the number of lost packets of data packets in the protocol data unit set, and discard the protocol data unit set or the data packet included in the protocol data unit set when the number of lost packets of the data packets in the protocol data unit set reaches or exceeds the packet loss threshold.

In some embodiments, the UE may determine, based on the packet loss threshold sent by the network device, the maximum number of data packets allowed to be discarded in the current protocol data unit set. In some embodiments, the UE may determine the number of lost packets in the current protocol data unit set based on a count value of a packet loss counter, and discard the protocol data unit set when the number of lost packets reaches the packet loss threshold. For example, the process may include: The UE may maintain a packet loss counter for the current protocol data unit set, and when a data packet is discarded by the protocol data unit set, the count value of the packet loss counter increases by one; and when the count value of the packet loss counter is equal to the packet loss threshold or equal to (the packet loss threshold+1), the UE may discard the protocol data unit set or the data packets included in the protocol data unit set. When transmission of the protocol data unit set is completed and the count value of the packet loss counter corresponding to the protocol data unit set does not reach the packet loss threshold, the protocol data unit set is not discarded.

It should be noted that discarding the protocol data unit set or the data packet included in the protocol data unit set may mean discarding a data packet that is in the protocol data unit set and that is not discarded.

The discarding a data packet that is in the protocol data unit set and that is not discarded may include two cases: (1) a client (for example, a protocol layer of the client) discards a data packet in the protocol data unit set that has been received; or (2) a client (for example, a protocol layer of the client) discards a data packet in the protocol data unit set that has not been received, in other words, once it is determined that the protocol data unit set needs to be discarded, the protocol data unit set may be directly discarded when receiving a data packet subsequent to the protocol data unit set. In some embodiments, the UE may release the count value of the packet loss counter or clear the count value of the packet loss counter when the count value of the packet loss counter reaches the packet loss threshold. The UE may alternatively release the count value of the packet loss counter or clear the count value of the packet loss counter when the transmission of the protocol data unit set is completed and the count value of the packet loss counter corresponding to the protocol data unit set does not reach the packet loss threshold.

In some embodiments, for a data packet successfully transmitted to the network device (for example, if the UE receives a status report fed back for the data packet, it indicates that the packet is successfully transmitted), if the data packet is discarded, the packet loss is not counted into the packet loss counter because the packet loss in this case does not affect obtaining of the information unit by the network device. In other words, the packet loss counter does not count a data packet discarded after successful transmission.

In some embodiments, whether transmission of the protocol data unit set is completed may be determined in a plurality of manners, such as: Manner 1: depending on whether the last data packet in the protocol data unit set has been received or has been transmitted to a next layer, and if yes, it is determined that the transmission is completed; and Manner 2: determining, based on received data packets that belong to the protocol data unit set, whether the last data packet in the protocol data unit set has been received and whether transmission of all data packets in the protocol data unit set is completed, where the all data packets includes data packets that have been successfully transmitted and that are actively discarded after a feedback message is received from the network device and data packets that have been discarded based on the discard timer, or the all data packets includes data packets that have been successfully transmitted and that are actively discarded after a feedback message is received from the network device and data packets that are transmitted to the next layer.

In some embodiments, it should be noted that the packet loss counter is configured in an acknowledged mode. The acknowledged mode includes receiving, after transmitting a data packet, indication information (or a status report) fed back by a receiving end, where the indication information indicates whether the data packet is successfully transmitted or whether the data packet needs to be retransmitted. The acknowledged mode may be an AM mode, a HARQ transmission mode, or an SN status report, and this is not limited in this application.

A discarding process according to the foregoing determining manner 1 is further described by using an example in which the entity is a PDCP entity and the protocol data unit set is a PDU set.

For example, for an AM DRB, after receiving a PDCP SDU, a PDCP entity of the UE may determine, based on a PDU set sequence number (assumed to be 1) corresponding to the PDCP SDU, that a PDU set to which the PDCP SDU belongs is a PDU set 1, and may determine, based on a PDU SN (assumed to be 1) corresponding to the PDCP SDU, that the PDCP SDU is the first data packet in the PDU set 1. Then, the UE starts a discard timer (discard timer) corresponding to the PDCP SDU, and maintains a packet loss counter for the PDU set 1. Subsequently, the PDCP entity of the UE continues to receive other PDCP SDUs in the PDU set 1, and the PDCP entity starts a corresponding discard timer (discard timer) for each PDCP SDU.

It should be noted that the discard timer (discard timer) herein may be timed for the UE to receive a status report fed back by the network device for a data packet, or may be timed for time at which the UE discards the data packet buffered in the UE. When the network device receives the data packet (in other words, the data packet is successfully transmitted to the network device), the network device feeds back a status report (or referred to as a feedback message) corresponding to the data packet to the UE, and informs the UE that the data packet has been successfully transmitted. After obtaining the information, the UE discards the data packet buffered in the UE. If the UE discards the corresponding data packet when the discard timer (discard timer) expires, it means that the data packet is not successfully transmitted.

In some embodiments, if receiving a status report that corresponds to the PDCP SDU and indicates that the PDCP SDU is successfully transmitted, the PDCP discards the PDCP SDU. In this case, packet loss occurs after successful transmission of the data packet, and therefore, the packet loss is not counted by the packet loss counter. In other words, the counter in embodiments of this application counts a packet loss in a case of unsuccessful transmission.

In some embodiments, if a discard timer corresponding to a PDCP SDU expires, the PDCP SDU is discarded. It may be noted that, if the PDCP does not receive a status report fed back by the network device for the PDCP SDU when the discard timer expires, the PDCP entity may determine that the PDCP SDU is discarded in the case of unsuccessful transmission. Based on this, if the PDCP SDU is discarded because a discard timer corresponding to the PDCP SDU expires, or in another case, if the protocol introduces another data packet discarding method and the method does not include discarding a data packet because of successful transmission of the data packet, the method results in discarded packets, then the packet loss counter counts the packet loss, and the count value increases by one. When the packet loss counter maintained by the PDCP entity for the PDU set 1 exceeds the packet loss threshold, it is considered that a data packet in the PDU set 1 needs to be discarded. The discard processing may include: (1) discarding a data packet in the PDU set 1 that has been received and that is not discarded; (2) for a subsequently received data packet, determining if the data packet belongs to the PDU set 1, and if the data packet belongs to the PDU set 1, discarding the data packet. In some other embodiments, the UE may release or clear the packet loss counter if transmission of data packets in the PDU set 1 is completed and a number of discarded data packets does not exceed the packet loss threshold.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set or data packet is discarded. This method can avoid transmission of invalid data packets or protocol data unit sets, thereby saving air interface resources.

For example, FIG. 5 is a schematic flowchart of another data packet discarding method according to an embodiment of this application. In this procedure, a manner of determining whether to discard a packet may correspond to the foregoing determining manner 2, to be specific, whether to discard a protocol data unit set or a data packet included in the protocol data unit set is determined based on the packet loss ratio of the protocol data unit set. The procedure may include the following steps:
S501: A network device sends a packet loss ratio threshold to a UE.

That the network device sends a packet loss ratio threshold to the UE may alternatively be understood as that the network device configures the packet loss ratio threshold to the UE.

The packet loss ratio threshold indicates a maximum proportion of data packets allowed to be discarded in the protocol data unit set. The maximum proportion of data packets allowed to be discarded in the protocol data unit set herein means that when a ratio of a number of discarded data packets in the protocol data unit set to a total number of data packets in the protocol data unit set is less than the packet loss ratio threshold, obtaining, by the application layer of the network device, an information unit carried by the protocol data unit set may not be affected. For example, when the number of discarded data packets is small, the network device may obtain content carried in discarded data packets through calculation based on content of data packets that are not discarded, thereby obtaining the complete information unit. When the ratio of the number of discarded data packets in the protocol data unit set to the total number of data packets in the protocol data unit set is greater than or equal to the packet loss ratio threshold, the network device may not be able to obtain the complete information unit based on payloads carried in the remaining data packets.

It should be noted that, for the determining manner 2, the embodiment of FIG. 5 in this application provides the process of configuring the packet loss ratio threshold by the network device, but in actual applications, the packet loss ratio threshold may alternatively be configured by a higher layer (such as an application layer or a transport layer) of the UE, or may alternatively be configured by a core network. This is not limited in this embodiment of this application.

In some embodiments, the packet loss ratio threshold is configured at a granularity of each data radio bearer (data radio bearer, DRB), in other words, a configuration granularity is per DRB, to be specific, the packet loss ratio threshold is included in a DRB configuration, and different DRBs may correspond to different packet loss ratio thresholds. Alternatively, the packet loss ratio threshold is configured at a granularity of each protocol layer entity, to be specific, the packet loss ratio threshold is included in a protocol layer entity configuration, and different types of protocol layer entities (such as an SDAP, a PDCP, and an RLC) may correspond to different packet loss ratio thresholds. Alternatively, the packet loss ratio threshold is configured at a granularity of each protocol data unit set, in other words, the configuration granularity is per protocol data unit set, to be specific, the packet loss ratio threshold is included in a protocol data unit set configuration, and different protocol data unit sets may correspond to different packet loss ratio thresholds. Alternatively, the packet loss ratio threshold is configured at a granularity of each type of protocol data unit set, to be specific, the packet loss ratio threshold is included in a type configuration of the protocol data unit set, and different types of protocol data unit sets may correspond to different packet loss ratio thresholds. The configuration granularity of the packet loss ratio threshold is not specifically limited in embodiments of this application.

It should be noted that the foregoing type of the protocol data unit set may be an importance level of the data unit set, a priority of the protocol data unit set, a sequence number of the protocol data unit set, or the like. This is not limited in this embodiment of this application.

In some embodiments, the network device may configure the packet loss threshold through RRC signaling, a MAC CE, or DCI.

In some embodiments, the packet loss ratio threshold configured by the network device may be included in a data radio bearer (data radio bearer, DRB) or a protocol layer entity configuration.

S502: Obtain a packet loss ratio corresponding to the protocol data unit set, and discard the protocol data unit set or the data packet included in the protocol data unit set when the packet loss ratio of the protocol data unit set reaches or exceeds the packet loss ratio threshold.

In some embodiments, the UE may determine the packet loss ratio threshold corresponding to the current protocol data unit set based on a packet loss threshold sent by the network device.

In some embodiments, the UE may determine the number of lost packets in the current protocol data unit set based on a count value of a packet loss counter and determine the packet loss ratio based on the ratio of the number of lost packets to the total number of data packets in the protocol data unit set, and discard the protocol data unit set or the data packet included in the protocol data unit set when the packet loss ratio reaches or exceeds the packet loss ratio threshold. For example, the process may include: The UE may maintain a packet loss counter for the current protocol data unit set, and when the UE determines that a data packet is discarded by the protocol data unit set, the count value of the packet loss counter increases by one, and obtain a packet loss ratio of the protocol data unit set. With the increasing of the number of lost packets, the packet loss ratio also increases. When the packet loss ratio is greater than or equal to the packet loss ratio threshold, the UE may discard a data packet that is included in the protocol data unit set and that is not discarded. When transmission of the protocol data unit set is completed and the packet loss ratio corresponding to the protocol data unit set does not reach the packet loss ratio threshold, the protocol data unit set is not discarded.

The data packets that are not discarded in the protocol data unit set and that may be discarded by the UE may include: (1) a data packet in the protocol data unit set that has been received by a protocol layer; and (2) a data packet in the protocol data unit set that has not been received by the protocol layer, in other words, once it is determined that the protocol data unit set needs to be discarded, the protocol layer may directly discard the protocol data unit set when receiving a data packet subsequent to the protocol data unit set.

In some embodiments, the UE may release the count value of the packet loss counter or clear the count value of the packet loss counter when the packet loss ratio reaches the packet loss ratio threshold. The UE may alternatively release the count value of the packet loss counter or clear the count value of the packet loss counter when the transmission of the protocol data unit set is completed and the packet loss ratio corresponding to the protocol data unit set does not reach the packet loss ratio threshold.

In some embodiments, for a data packet successfully transmitted to the network device (for example, if the UE receives a status report fed back for the data packet, it indicates that the packet is successfully transmitted), if the protocol layer actively discards the data packet, the packet loss is not counted into the packet loss counter reflected by a because the packet loss in this case does not affect obtaining of the information unit by the network device. In other words, the packet loss counter does not count a data packet discarded after successful transmission.

In some embodiments, whether transmission of the protocol data unit set is completed may be determined in a plurality of manners, such as: Manner 1: depending on whether the last data packet in the protocol data unit set has been received or has been transmitted to a next layer, and if yes, it is determined that the transmission is completed; and Manner 2: determining, based on received data packets that belong to the protocol data unit set, whether the last data packet in the protocol data unit set has been received and whether transmission of all data packets in the protocol data unit set is completed, where the all data packets includes data packets that have been successfully transmitted and that are actively discarded after a feedback message is received from the network device and data packets that have been discarded based on the discard timer, or the all data packets includes data packets that have been successfully transmitted and that are actively discarded by the protocol layer after receiving a feedback message from the network device and data packets that are transmitted to the next layer.

A discarding process according to the foregoing determining manner 2 is further described by using an example in which the entity is a PDCP entity and the protocol data unit set is a PDU set.

For example, for an AM DRB, after receiving a PDCP SDU, a PDCP entity of the UE may determine, based on a PDU set sequence number (assumed to be 1) corresponding to the PDCP SDU, that a PDU set to which the PDCP SDU belongs is a PDU set 1, and may determine, based on a PDU SN (assumed to be 1) corresponding to the PDCP SDU, that the PDCP SDU is the first data packet in the PDU set 1. Then, the UE starts a discard timer (discard timer) corresponding to the PDCP SDU, and maintains a packet loss counter for the PDU set 1. Subsequently, the PDCP entity of the UE continues to receive other PDCP SDUs in the PDU set 1, and the PDCP entity starts a corresponding discard timer (discard timer) for each PDCP SDU.

It should be noted that the discard timer herein may be timed for the UE to receive a status report fed back by the network device for a data packet, or may be timed for time at which the UE discards the data packet buffered in the UE. When the network device receives the data packet (in other words, the data packet is successfully transmitted to the network device), the network device feeds back a status report (or referred to as a feedback message) corresponding to the data packet to the UE, and informs the UE that the data packet has been successfully transmitted. After obtaining the information, the UE discards the data packet buffered in the UE. If the UE discards the corresponding data packet when the discard timer expires, it means that the data packet is not successfully transmitted.

In some embodiments, if receiving a status report that corresponds to the PDCP SDU and indicates that the PDCP SDU is successfully transmitted, the PDCP discards the PDCP SDU. In this case, packet loss occurs after successful transmission of the data packet, and therefore, the packet loss is not counted by the packet loss counter. In other words, the counter in embodiments of this application counts a packet loss in a case of unsuccessful transmission.

In some embodiments, if a discard timer corresponding to a PDCP SDU expires, the PDCP SDU is discarded. It may be noted that, if the PDCP does not receive a status report fed back by the network device for the PDCP SDU when the discard timer expires, the PDCP entity may determine that the PDCP SDU is discarded in the case of unsuccessful transmission. Based on this, if the PDCP SDU is discarded because a discard timer corresponding to the PDCP SDU expires, or in another case, if the protocol introduces another data packet discarding method and the method does not include discarding a data packet because of successful transmission of the data packet, the method results in discarded packets, then the packet loss counter counts the packet loss, and the count value increases by one. When a ratio of the count value of the packet loss counter maintained by the PDCP entity for the PDU set 1 to the total number of PDCP SDUs included in the PDU set exceeds the packet loss ratio threshold, it is considered that a data packet in the PDU set 1 needs to be discarded. The discard processing may include: (1) discarding a data packet in the PDU set 1 that has been received and that is not discarded; (2) for a subsequently received data packet, determining if the data packet belongs to the PDU set 1, and if the data packet belongs to the PDU set 1, discarding the data packet. In some other embodiments, the UE may release or clear the packet loss counter if transmission of data packets in the PDU set 1 is completed and a ratio of the number of lost packets to the total number of PDCP PDUs does not exceed the packet loss threshold.

It should be noted that the UE may first determine whether at least one data packet in the protocol data unit set has been successfully received before configuring the packet loss counter, and the UE may only configure the packet loss counter after determining that one or more data packets in the protocol data unit set have been successfully received by the UE. Alternatively, the UE may first determine whether the UE has successfully transmitted at least one data packet in the protocol data unit set to the network device (for example, determine whether a feedback message indicating successful data packet transmission sent by the network device has been received) before configuring the packet loss counter, and the UE may only configure the packet loss counter after determining that one or more data packets in the protocol data unit set have been successfully transmitted to the network device.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set or data packet is discarded. This method can avoid transmission of invalid data packets or protocol data unit sets, thereby saving air interface resources.

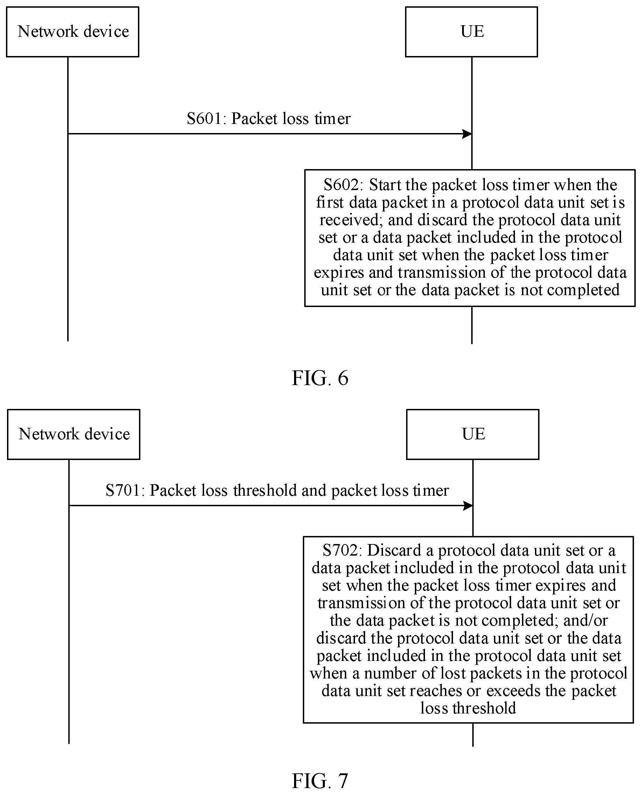

For example, FIG. 6 is a schematic flowchart of still another data packet discarding method according to an embodiment of this application. In this procedure, a manner of determining whether to discard a packet may correspond to the foregoing determining manner 3, to be specific, whether to discard a protocol data unit set or a data packet included in the protocol data unit set is determined depending on whether a packet loss timer set for the protocol data unit set expires. The procedure may include the following steps:
S601: A network device sends a packet loss timer to a UE.

That the network device sends a packet loss timer to the UE may alternatively be understood as that the network device configures the packet loss timer to the UE.

The packet loss timer is configured to indicate packet loss time of the protocol data unit set. In an implementation, the packet loss time may be understood as allowable transmission time of the protocol data unit set.

It should be noted that, for the manner 3 of determining whether to discard a packet, the embodiment of FIG. 6 in this application provides the process of configuring the packet loss timer by the network device, but in actual applications, the packet loss timer may alternatively be configured by a higher layer (such as an application layer or a transport layer) of the UE, or may alternatively be configured by a core network. This is not limited in this embodiment of this application.

In some embodiments, the packet loss timer is configured at a granularity of each data radio bearer (data radio bearer, DRB), in other words, a configuration granularity is per DRB, to be specific, the packet loss timer is included in a DRB configuration, and different DRBs may correspond to different packet loss timers. Alternatively, the packet loss timer is configured at a granularity of each protocol layer entity, to be specific, the packet loss timer is included in a protocol layer entity configuration, and different types of protocol layer entities (such as an SDAP, a PDCP, and an RLC) may correspond to different packet loss timers. Alternatively, the packet loss timer is configured at a granularity of each protocol data unit set, in other words, the configuration granularity is per protocol data unit set, to be specific, the packet loss timer is included in a protocol data unit set configuration, and different protocol data unit sets may correspond to different packet loss timers. Alternatively, the packet loss timer is configured at a granularity of each type of protocol data unit set, to be specific, the packet loss timer is included in a type configuration of the protocol data unit set, and different types of protocol data unit sets may correspond to different packet loss timers. The configuration granularity of the packet loss timer is not specifically limited in embodiments of this application.

In some embodiments, the network device may configure the packet loss timer through RRC signaling, a MAC CE, or DCI.

In some embodiments, the packet loss timer configured by the network device may be included in a data radio bearer (data radio bearer, DRB) or a protocol layer entity configuration.

S602: Start the packet loss timer when the first data packet in the protocol data unit set is received; and discard the protocol data unit set or the data packet included in the protocol data unit set when the packet loss timer expires and transmission of data packets in the protocol data unit set is not completed, or when the packet loss timer expires.

In some embodiments, the packet loss timer is started when the first data packet in the protocol data unit set is received. A manner of determining that a received data packet is the first data packet in the protocol data unit set may include: after receiving a data packet, determining whether the data packet is a start data packet of the protocol data unit set, and if yes, it indicates that the data packet is the first data packet in the protocol data unit set; or after receiving a data packet, determining whether a data packet sequence number corresponding to the data packet is the first data packet in the protocol data unit set; or if after receiving a data packet, a protocol layer entity determines that a data packet in the protocol data unit set has not been received previously, then the data packet is the first data packet in the protocol data unit set. This is not limited in this application.

In some embodiments, the protocol data unit set or the data packet included in the protocol data unit set is discarded when the packet loss timer expires and transmission of data packets in the protocol data unit set is not completed. Alternatively, in some other embodiments, the protocol data unit set or the data packet included in the protocol data unit set may be discarded when the packet loss timer expires. That a data packet in the protocol data unit set has not been transmitted may be determined in the following manners:
In some embodiments, whether transmission of the protocol data unit set is completed may be determined in a plurality of manners, such as: Manner 1: depending on whether the last data packet in the protocol data unit set has been received or has been transmitted to a next layer, and if yes, it is determined that the transmission is completed; and Manner 2: determining, based on received data packets that belong to the protocol data unit set, whether the last data packet in the protocol data unit set has been received and whether transmission of all data packets in the protocol data unit set is completed, where the all data packets includes data packets that have been successfully transmitted and that are actively discarded after a feedback message is received from the network device and data packets that have been discarded based on the discard timer, or the all data packets includes data packets that have been successfully transmitted and that are actively discarded by the protocol layer after receiving a feedback message from the network device and data packets that are transmitted to the next layer.

It should be noted that the packet loss timer and the discard timer (discard timer) in embodiments of this application are two different concepts that need to be understood differently.

In some embodiments, if transmission of data packets in the protocol data unit set is completed when the packet loss timer is not expired, the packet loss timer may be stopped, or the packet loss timer may be released, or the packet loss timer may be cleared.

In some embodiments, the protocol data unit set may be discarded if the packet loss timer expires.

In some embodiments, discarding the protocol data unit set may specifically means discarding a data packet that is in the protocol data unit set and that is not discarded. The data packets that are not discarded in the protocol data unit set may include: (1) a data packet in the protocol data unit set that has been received by a client (for example, a protocol layer of the client); and (2) a data packet in the protocol data unit set that has not been received by the client, in other words, once it is determined that the protocol data unit set needs to be discarded, the client (for example, the protocol layer of the client) may directly discard the protocol data unit set when receiving a data packet subsequent to the protocol data unit set.

A discarding process corresponding to the foregoing manner 3 for determining whether to discard a packet is further described by using an example of a PDCP entity.

For example, after receiving a PDCP SDU, a PDCP entity of the UE may determine, based on a protocol data unit set sequence number (assumed to be 1) corresponding to the PDCP SDU, that a protocol data unit set to which the PDCP SDU belongs is a protocol data unit set 1, and may determine, based on a PDU SN (assumed to be 1) corresponding to the PDCP SDU, that the PDCP SDU is the first data packet in the protocol data unit set 1. Then, the UE starts a discard timer (discard timer) corresponding to the PDCP SDU, and starts a corresponding packet loss timer for the protocol data unit set 1. Subsequently, the PDCP entity of the UE continues to receive other PDCP SDUs in the protocol data unit set 1, and the PDCP entity starts a corresponding discard timer (discard timer) for each PDCP SDU.

In some embodiments, if the packet loss timer expires, and there is a data packet that is in the protocol data unit set 1 and that is not discarded at the PDCP layer, the data packet that is in the protocol data unit set 1 and that is not discarded is directly discarded, to discard the protocol data unit set 1.

In some embodiments, in a mode in which transmission of a data packet is acknowledged (to be specific, the network device feeds back to the UE after receiving a data packet), the packet loss timer is stopped if transmission of all data packets in the protocol data unit set 1 is completed (including data packets that have been discarded by the PDCP entity or data packets that are successfully transmitted). In a mode in which a data packet is unacknowledged, the packet loss timer is stopped if transmission of all data packets in the protocol data unit set 1 is completed (all the data packets have been transmitted to a next layer or discarded).

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set is discarded. This method can avoid transmission of invalid data packets or protocol data unit sets, thereby saving air interface resources.

For example, FIG. 7 is a schematic flowchart of still another data packet discarding method according to an embodiment of this application. In this procedure, a manner of determining whether to discard a packet may correspond to the foregoing determining manner 4, to be specific, whether to discard a protocol data unit set or a data packet included in the protocol data unit set is determined comprehensively based on the number of lost packets of the protocol data unit set and the packet loss timer corresponding to the protocol data unit set. The procedure may include the following steps:
S701: A network device sends a packet loss threshold and a packet loss timer to a UE.

That the network device sends a packet loss threshold and a packet loss timer to the UE may alternatively be understood as that the network device configures the packet loss threshold and the packet loss timer to the UE. For respective meanings of the packet loss threshold and the packet loss timer, refer to the descriptions in the embodiment of FIG. 4 and the embodiment of FIG. 6. This is not described in detail herein again.

It should be noted that, for the manner 4 of determining whether to discard a packet, the embodiment of FIG. 7 in this application provides the process of configuring the packet loss threshold by the network device, but in actual applications, the packet loss threshold may alternatively be configured by a higher layer (such as an application layer or a transport layer) of the UE, or may alternatively be configured by a core network device. This is not limited in this embodiment of this application.

For configuration granularities of the packet loss threshold and the packet loss timer, refer to the descriptions in the embodiment of FIG. 4 and the embodiment of FIG. 6. This is not described in detail herein again.

For manners in which the network device sends the packet loss threshold and the packet loss timer to the UE, refer to the descriptions in the embodiment of FIG. 4 and the embodiment of FIG. 6 respectively. This is not described in detail herein again.

S702: Discard the protocol data unit set or the data packet included in the protocol data unit set when the packet loss timer expires and transmission of the protocol data unit set or the data packet is not completed; and/or when the number of lost packets in the protocol data unit set reaches or exceeds the packet loss threshold.

It should be noted that the main difference between this embodiment of this application and the embodiment of FIG. 4 and the embodiment of FIG. 6 is that the UE comprehensively determines whether to discard the protocol data unit set by using the following two manners: using the packet loss counter to count whether the number of lost packets in the protocol data unit set reaches the packet loss threshold and using the packet loss timer to count whether transmission of the data packets in the protocol data unit set is completed during timing time.

In some embodiments, when it is determined that the number of lost packets in the protocol data unit set reaches or exceeds the packet loss threshold, and/or it is determined that transmission of the data packets in the protocol data unit set is not completed when the packet loss timer expires, the protocol data unit set or the data packet included in the protocol data unit set may be discarded. Alternatively, when it is determined that the number of lost packets in the protocol data unit set reaches or exceeds the packet loss threshold, and/or the packet loss timer expires, the protocol data unit set or the data packet included in the protocol data unit set may be discarded. In other words, the protocol data unit set can be discarded when at least one of the two discarding conditions is satisfied. Specifically, if the packet loss timer expires, but a count value counted by the packet loss counter does not reach the packet loss threshold, the protocol data unit set or the data packet included in the protocol data unit set is discarded. If the count value counted by the packet loss counter reaches or exceeds the packet loss threshold, but the packet loss timer does not expire, the protocol data unit set or the data packet included in the protocol data unit set is also discarded. If the count value counted by the packet loss counter reaches the packet loss threshold and the packet loss timer expires, the protocol data unit set or the data packet included in the protocol data unit set is also discarded. It should be understood that the discarding processing in embodiments of this application may mean discarding the protocol data unit set or the data packet included in the protocol data unit set.

In an example, the protocol data unit set is a PDU set and the data packet is a PDU. In the data packet discarding method corresponding to the determining manner 4, an example process may include the following steps: (1) determining a packet loss threshold and a packet loss timer of the PDU set, and when a number of discarded data packet in the PDU set (in other words, a number of lost packets in the PDU set) reaches (or exceeds) the packet loss threshold, directly discarding the data packet in the PDU set; or when the packet loss timer expires, discarding the data packet that is in the PDU set and that is not discarded; (2) starting the packet loss timer after receiving the first data packet in the PDU set, where a manner of determining the first data packet includes receiving a start PDU (a data packet identifying the start) in the PDU set, or receiving the first data packet that belongs to the PDU set; (3) maintaining a packet loss counter for the PDU set when the packet loss timer is started, where the packet loss counter increases by one when a data packet in the PDU set is discarded; and when the packet loss counter exceeds the packet loss threshold (the timer does not expire), directly discarding the data packet that is in the PDU set and that is not discarded; (4) when the packet loss timer expires, but the packet loss counter does not exceed the packet loss threshold, discarding the data packet that is in the PDU set and that is not discarded; and (5) based on the foregoing two conditions, when one of the two conditions is met, discarding the PDU set; or discarding the PDU set only when the two conditions are both met.

For detailed processes of implementing embodiments of this application, such as a manner of configuring the packet loss threshold, a manner of starting the packet loss timer, and a manner of discard processing, refer to the foregoing descriptions of the embodiment of FIG. 4 and the embodiment of FIG. 6. This is not described in detail herein again.

It should be noted that, the embodiment of FIG. 7 merely uses an example in which whether to discard the protocol data unit set or the data packet included in the protocol data unit set is determined based on the packet loss timer and the packet loss threshold. In some other embodiments, whether to discard the protocol data unit set or the data packet included in the protocol data unit set may alternatively be determined based on a packet loss timer and a packet loss fraction threshold, or whether to discard the protocol data unit set or the data packet included in the protocol data unit set is determined based on another combination of two determining bases. This is not limited in embodiments of this application.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set is discarded. This method can avoid transmission of invalid data packets or protocol data unit sets, thereby saving air interface resources.

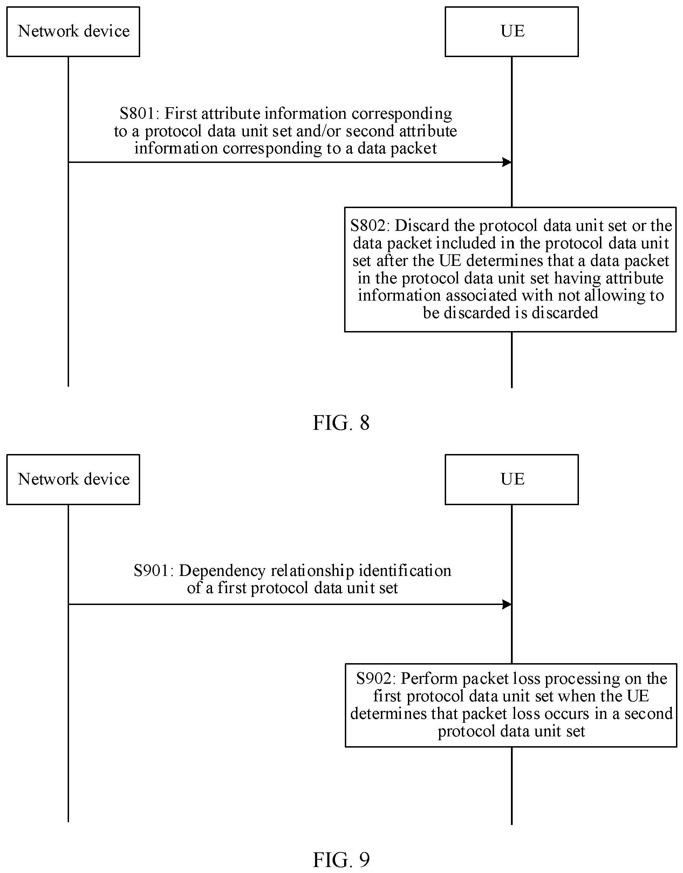

For example, FIG. 8 is a schematic flowchart of still another data packet discarding method according to an embodiment of this application. In this procedure, a manner of determining whether to discard a packet may correspond to the foregoing determining manner 5, to be specific, whether to discard a protocol data unit set or a data packet included in the protocol data unit set is determined depending on whether a data packet having specific attribute information included in the protocol data unit set is discarded, where the specific attribute is associated with not allowing to be discarded. The procedure may include the following steps:
S801: A network device sends first attribute information corresponding to the protocol data unit set and/or second attribute information corresponding to the data packet to a UE.

The first attribute information is associated with allowing to be discarded or not allowing to be discarded and the second attribute information is associated with allowing to be discarded or not allowing to be discarded. That the network device sends the first attribute information corresponding to the protocol data unit set and/or the second attribute information corresponding to the data packet to the UE may alternatively be understood as that the network device configures the first attribute information corresponding to the protocol data unit set and/or the second attribute information corresponding to the data packet to the UE.

In some embodiments, there may be a plurality of manners in which the network device configures a protocol data unit set and/or a data packet having attribute information associated with allowing to be discarded, including: (1) The network device may perform setting based on a priority or importance of the protocol data unit set and/or the data packet, for example, associate a protocol data unit set and/or a data packet with a higher priority or higher importance with not allowing to be discarded, in other words, set a data packet with a higher priority or higher importance as a protocol data unit set and/or a data packet that does not allow to be discard; (2) the network device may alternatively perform setting based on a position of the data packet in the protocol data unit set, for example, associate a start PDU with not allowing to be discarded, in other words, set a data packet used as the start PDU as a data packet that does not allow to be discarded; (3) the network device may alternatively perform setting based on a sequence number of the protocol data unit set and/or the data packet, for example, associate PDU SNs 1 to m (m is an integer greater than 1) with not allowing to be discarded, in other words, set data packets with PDU SNs 1 to m as data packets that do not allow to be discarded; or the like. Similarly, the network device may alternatively set, based on a priority, importance, a sequence number, and the like of the protocol data unit set and/or data packets, the protocol data unit set and/or the data packet allowed to be discarded in the protocol data unit sets.

Optionally, when the network device configures a data packet that is in the protocol data unit set and that allows to be discarded, a data packet that is in the protocol data unit set and that is not configured to allow to be discarded may be considered as a data packet that does not allow to be discarded. For example, the network device configures a PDU whose PDU SN is within a to b (both a and b are integers greater than or equal to 1, and b is greater than a) in the protocol data unit set as a discardable data packet. In this case, another PDU whose PDU SN is not a sequence number within a to b in the protocol data unit set may be considered as a data packet that does not allow to be discarded.

It should be noted that, for the determining manner 5, the embodiment of FIG. 8 in this application provides the process of configuring the packet loss threshold by the network device, but in actual applications, the packet loss threshold may alternatively be configured by a higher layer (such as an application layer or a transport layer) of the UE, or may alternatively be configured by a core network. This is not limited in this embodiment of this application.

S802: Discard the protocol data unit set or the data packet included in the protocol data unit set after the UE determines that a data packet in the protocol data unit set having attribute information associated with not allowing to be discarded is discarded.

In some embodiments, if the UE obtains discardable data packets sent by the network device, the UE may discard the protocol data unit set when detecting that one or more data packets that do not belong to the discardable data packets are discarded. Alternatively, if the UE obtains discardable data packets sent by the network device, the UE may determine non-discardable data packets based on all PDUs included in the protocol data unit set, and then the UE may discard the protocol data unit set when detecting that one or more non-discardable data packets are discarded. Alternatively, if the UE obtains non-discardable data packets sent by the network device, the UE may directly discard the protocol data unit set when detecting that one or more non-discardable packets are discarded.

For a manner in which the UE discards the protocol data unit set, refer to the related descriptions in the embodiment of FIG. 4 to the embodiment of FIG. 6. This is not described in detail herein again.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set is discarded. This method can avoid transmission of invalid data packets or protocol data unit sets, thereby saving air interface resources.

For example, FIG. 9 is a schematic flowchart of still another data packet discarding method according to an embodiment of this application. In this procedure, a manner of determining whether to discard a packet may correspond to the foregoing determining manner 6, to be specific, for a protocol data unit set having a dependency, whether to discard the protocol data unit set or a data packet included in the protocol data unit set is determined depending on whether there is packet loss in an associated protocol data unit set or a number of lost packets of the associated protocol data unit set. The procedure may include the following steps:
S901: A network device sends a dependency identification of a first protocol data unit set to a UE.

A protocol data unit set on which the first protocol data unit set depends is denoted as a second protocol data unit set. That a network device sends a dependency identification of a first protocol data unit set to a UE may alternatively be understood as that the network device configures the dependency identification of the first protocol data unit set to the UE.

The dependency relationship herein may alternatively be described as a dependency. Two or more protocol data unit sets having a dependency relationship may have the same dependency identification, where the dependency identification indicates another protocol data unit set interdependent with the protocol data unit set. The first protocol data unit set and the second protocol data unit set herein are merely used to be distinguished from each other, and the "first" and "second" do not represent an order or number of protocol data unit sets. Specifically, the dependency between the first protocol data unit set and the second protocol data unit set may be understood as that: application or action of the first protocol data unit set depends on successful transmission of the second protocol data unit set, and transmission of the first protocol data unit set is necessary only when the second protocol data unit set is successfully transmitted; if the second protocol data unit set is not successfully transmitted, the first protocol data unit set, even if successfully transmitted, is not valuable for use. For example, an I frame and a P frame are used as an example, application of the P frame needs to be implemented based on data of the I frame. To be specific, the P frame needs to be transmitted only if the I frame is successfully transmitted, if the I frame is not successfully transmitted, the P-frame also does not need to be transmitted subsequently.

Optionally, there may be one or more second protocol data unit sets on which the first protocol data unit set depends. When there are a plurality of second protocol data unit sets on which the first protocol data unit set depends, when any one of the second protocol data unit sets is discarded, the first protocol data unit set does not need to be transmitted subsequently, and the first protocol data unit set may be discarded.

In some embodiments, there may be a plurality of manners in which the network device configures a dependency between protocol data unit sets, including, for example: (1) configuring a dependency identification (identification, ID) for protocol data unit sets having a dependency, where the protocol data unit sets configured with the same dependency ID are interdependent; (2) configuring, for a specific protocol data unit set (such as the first protocol data unit set), an identification of a protocol data unit set (such as the second protocol data unit set) on which the specific protocol data unit set depends, for example, an ID of the second protocol data unit set is carried in the first protocol data unit set; and (3) configuring a number of data packets that allow to be discarded in a protocol data unit set with a dependency relationship. It should be understood that the three dependency configuration manners described above may be all configured in the protocol data unit set, or may be partially configured in the protocol data unit set. This is not limited in the embodiments of this application.

S902: Discard the first protocol data unit set when the UE determines that packet loss occurs in the second protocol data unit set.

In some embodiments, the UE may determine, based on a received dependency relationship (such as a dependency identification) of the first protocol data unit set, that the first protocol data unit set has a dependency relationship with the second protocol data unit set. Then, whether to discard the first protocol data unit set may be determined based on the dependency relationship.

For example, there may be a plurality of manners in which the UE determines, based on the dependency relationship, whether to discard the first protocol data unit set may include, for example: (1) when the UE determines that the second protocol data unit set is discarded (for a determining manner, refer to the foregoing related embodiments), based on a dependency identification of the second protocol data unit set, discarding a subsequent first protocol data unit set having the same dependency identification; (2) when the UE receives the first protocol data unit set, determining, based on the dependency identification corresponding to the first protocol data unit set, that the first protocol data unit set depends on the second protocol data unit set, and if determining that the second protocol data unit set is discarded, discarding the first protocol data unit set; and (3) determining, based on the dependency identification of the first protocol data unit set, whether a number of lost packets in a protocol data unit set having the same dependency identification with the first protocol data unit set exceeds a preset threshold, and if the number of lost packets exceeds the preset threshold, discarding the first protocol data unit set.

For a manner in which the UE discards the protocol data unit set, refer to the related descriptions in the embodiment of FIG. 4 to the embodiment of FIG. 6. This is not described in detail herein again.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set is discarded. This method can avoid transmission of invalid data packets or protocol data unit sets, thereby saving air interface resources.

It should be noted that after a protocol layer (such as a PDCP layer) discards a specific protocol data unit set, the protocol layer needs to notify a lower layer to also discard a data packet in the protocol data unit set. For example, after the PDCP layer discards a protocol data unit set, the PDCP layer notifies the RLC layer to discard a data packet that is buffered by the RLC layer and that is related to the protocol data unit set.

However, in some embodiments, if a data packet in the protocol data unit set has been transmitted by the RLC to a next layer (a MAC layer), the RLC may notify the MAC layer of attribute information of the protocol data unit set (for example, a sequence number of the protocol data unit set, a sequence number of a PDU in the protocol data unit set, or a start PDU/an end PDU in the protocol data unit set), and may notify the MAC layer that, if a data packet related to the protocol data unit set has not been transmitted over an air interface, there is no need to schedule the protocol data unit set, or there is no need to wait for scheduling resources corresponding to the protocol data unit set. The MAC may determine, in response to the notification by the RLC layer, whether the protocol data unit set has been transmitted over the air interface, and if the protocol data unit set has not been transmitted over the air interface, the MAC may no longer wait for the scheduling resources corresponding to the protocol data unit set or no longer schedule the protocol data unit set.

In some other embodiments, if the data packet in the protocol data unit set has already been transmitted by the RLC to the next layer (the MAC layer), the MAC layer may alternatively not discard the related data packet. For example, when a protocol data unit set in the MAC layer has been transmitted over an air interface, the protocol data unit set is not discarded.

It should be noted that the foregoing discarding processing procedures shown in the embodiments of FIG. 4 to FIG. 9 are merely illustrative examples, and in actual application, the discarding processing procedure may alternatively include more or fewer steps. This is not limited in embodiments of this application.

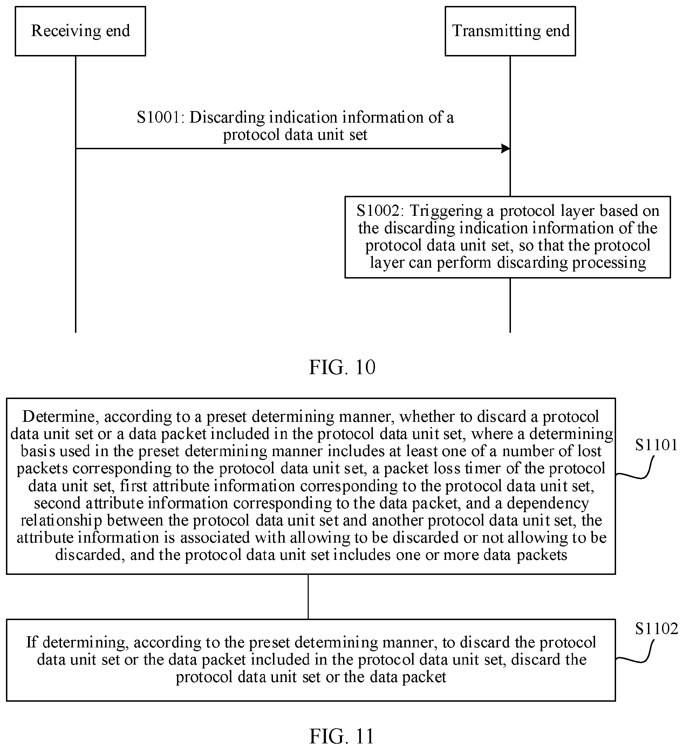

A process of triggering the discarding processing of the protocol data unit set is described below with reference to the accompanying drawings. For example, FIG. 10 is a schematic diagram of a triggering procedure of discard processing according to a data packet discarding method according to an embodiment of this application. The procedure may include the following steps:
S1001: A network device sends discard indication information of a protocol data unit set to a transmitting end device.

That a network device sends discard indication information of a protocol data unit set to a UE may alternatively be understood as that the network device configures the discard indication information of the protocol data unit set to the UE. For example, a data structure corresponding to the discard indication information of the protocol data unit set configured by the network device may be, for example, enumerated or Boolean. The enumerated content may be true, for example, may be represented as: PDUsetDiscard ENUMERATED {true}. However, the specific data structure of the discard indication information is not limited in embodiments of this application.

For example, the discard indication information may be carried in a plurality of messages sent by the network device to the transmitting end device, or may be sent as a separate message to the transmitting end device. This is not limited in this embodiment of this application.

S1002: The transmitting end device receives the discard indication information of the protocol data unit set or a data packet, and triggers discarding of the protocol data unit set or the data packet.

In some embodiments, when receiving the discard indication information, the transmitting end device may enable, in response to the discard indication information, a service of discarding the protocol data unit set. During transmission of the protocol data unit set, when it is determined that the protocol data unit set satisfies a condition for discarding processing, discarding of the protocol data unit set may be triggered at a protocol layer. For a manner of determining whether the protocol data unit set satisfies the condition for discarding processing and a process of discarding the protocol data unit set, respectively refer to the related descriptions above. These are not described herein again.

According to the data packet discarding method provided in this application, when a packet loss occurs during transmission of protocol data unit sets, whether it is necessary to transmit a remaining data packet or protocol data unit set is determined through calculation based on information about the number of lost packets, information about time of arrival of the data packet, and the dependency between the protocol data unit sets; and when there is no need to continue transmission, the protocol data unit set is discarded. This method can avoid transmission of invalid data packets or protocol data unit sets, thereby saving air interface resources.

It should be noted that the foregoing discarding processing procedure shown in the embodiment of FIG. 10 is merely an illustrative example, and in actual application, the discarding processing procedure may alternatively include more or fewer steps. This is not limited in embodiments of this application.

For example, FIG. 11 is a schematic flowchart of a data packet discarding method according to an embodiment of this application. The procedure may be executed by the transmitting end device, and the procedure may specifically include the following steps:
S1101: Determine, according to a preset determining manner, whether to discard a protocol data unit set or a data packet included in the protocol data unit set, where a determining basis used in the preset determining manner includes at least one of a number of lost packets corresponding to the protocol data unit set, a packet loss timer of the protocol data unit set, first attribute information corresponding to the protocol data unit set, second attribute information corresponding to the data packet, and a dependency relationship between the protocol data unit set and another protocol data unit set, the attribute information is associated with allowing to be discarded or not allowing to be discarded, and the protocol data unit set includes one or more data packets.

In an implementation, the data packet may be a PDU data packet or an SDU data packet, but this is not limited thereto in this application.

In an implementation, the discarding a protocol data unit set or a data packet in the protocol data unit set herein may include: discarding a data packet that is in the protocol data unit set and that is not discarded. The data packet that is not discarded herein may be a data packet that has been received by the transmitting end but is not discarded; or may be a data packet that is in the protocol data unit set and that has not been received. In other words, if it is determined that a data packet in the protocol data unit set needs to be discarded, the data packet in the protocol data unit set may be discarded directly after being received.

In some embodiments, the protocol data unit set may correspond to a PDU set, but this is not limited thereto.

In some embodiments, allowing to be discarded means that a protocol data unit set or a data packet may allow to be discarded, and does not cause the protocol data unit set or the data packet in the protocol data unit set to be discarded. Not allowing to be discarded means that a protocol data unit set or a data packet does not allow to be discarded, and causes discarding of the protocol data unit set or the data packet in the protocol data unit set if discarded.

In some embodiments, that the attribute information is associated with allowing to be discarded or not allowing to be discarded means that a data packet or a protocol data unit set having the attribute information belongs to a type of data packet or protocol data unit that allows to be discarded; or a data packet or a protocol data unit set having the attribute information belongs to a type of data packet or protocol data unit set that does not allow to be discarded. For example, a high priority attribute is associated with not allowing to be discarded. In this case, a packet protocol data unit set with a high priority is a data packet or a protocol data unit set that does not allow to be discarded, and if discarding occurs, discarding is needed, and a corresponding protocol data unit set or another data packet in the protocol data unit set is discarded.

In some embodiments, the transmitting end may be a user equipment, but this is not limited thereto.

In some embodiments, the determining, according to a preset determining manner, whether to discard a protocol data unit set or a data packet included in the protocol data unit set may alternatively mean determining, according to the preset determining manner, whether the protocol data unit set or the data packet included in the protocol data unit set meets a discarding condition, and when the discarding condition is met, discarding the protocol data unit set or the data packet included in the protocol data unit set.

S1102: If determining, according to the preset determining manner, to discard the protocol data unit set or the data packet included in the protocol data unit set, discard the protocol data unit set or the data packet.

In an embodiment, the first attribute information includes at least one of a sequence number corresponding to the protocol data unit set, a total number of data packets included in the protocol data unit set, an importance level of the protocol data unit set, a priority of the protocol data unit set, and a dependency relationship of the protocol data unit set; and the second attribute information includes at least one of a data packet sequence number corresponding to the data packet, a position of the data packet in the protocol data unit set, an importance level of the data packet, and a priority of the data packet.

In an embodiment, when the determining basis used in the preset determining manner is the number of lost packets corresponding to the protocol data unit set, the method specifically includes: obtaining a packet loss threshold corresponding to the protocol data unit set; obtaining the number of lost packets corresponding to the protocol data unit set; and if the number of lost packets reaches or exceeds the packet loss threshold, discarding the protocol data unit set or the data packet.

In in embodiment, the obtaining a packet loss threshold corresponding to the protocol data unit set specifically includes: receiving first configuration information sent by a receiving end, where the first configuration information indicates the packet loss threshold, and the receiving end is configured to receive the data packet; obtaining the packet loss threshold preconfigured by the transmitting end; receiving, by using a protocol layer of the transmitting end, the packet loss threshold sent by a higher layer of the transmitting end; or receiving second configuration information sent by a core network, where the second configuration information indicates the packet loss threshold.

In an implementation, the packet loss threshold preconfigured by the transmitting end may be a statically configured packet loss threshold; and the packet loss threshold transmitted by the higher layer of the transmitting end may be a dynamically configured packet loss rate threshold.

In an embodiment, when the transmitting end configures the packet loss threshold, the method further includes: configuring the packet loss threshold at a granularity of a protocol layer entity; configuring the packet loss threshold at a granularity of a data radio bearer DRB; configuring the packet loss threshold at a granularity of the protocol data unit set; or configuring the packet loss threshold at a granularity of a type of the protocol data unit set, where the type of the protocol data unit set is at least one of a priority of the protocol data unit set, an importance level of the protocol data unit set, and a sequence number of the protocol data unit set.

In an embodiment, when the determining basis used in the preset determining manner is the number of lost packets corresponding to the protocol data unit set, the method specifically includes: obtaining a packet loss ratio threshold corresponding to the protocol data unit set; obtaining the number of lost packets corresponding to the protocol data unit set; obtaining a packet loss ratio corresponding to the protocol data unit set based on a ratio of the number of lost packets to a total number of data packets included in the protocol data unit set; and if the packet loss ratio reaches or exceeds the packet loss ratio threshold, discarding the protocol data unit set or the data packet.

In an embodiment, the obtaining a packet loss ratio threshold corresponding to the protocol data unit set specifically includes: receiving third configuration information sent by a receiving end, where the third configuration information indicates the packet loss ratio threshold, and the receiving end is configured to receive the data packet; obtaining the packet loss ratio threshold preconfigured by the transmitting end; receiving, by using a protocol layer of the transmitting end, the packet loss ratio threshold sent by a higher layer of the transmitting end; or receiving fourth configuration information sent by a core network, where the fourth configuration information indicates the packet loss ratio threshold.

In an embodiment, when the transmitting end configures the packet loss ratio threshold, the method further includes: configuring the packet loss ratio threshold at a granularity of a protocol layer entity; configuring the packet loss ratio threshold at a granularity of a DRB; configuring the packet loss ratio threshold at a granularity of the protocol data unit set; or configuring the packet loss ratio threshold at a granularity of a type of the protocol data unit set, where the type of the protocol data unit set is at least one of a priority of the protocol data unit set, an importance level of the protocol data unit set, and a sequence number of the protocol data unit set.

In an embodiment, the obtaining the number of lost packets corresponding to the protocol data unit set specifically includes: setting a packet loss counter, where the packet loss counter is configured to count a number of discarded data packets in the protocol data unit set; adding 1 to a count value of the packet loss counter when obtaining discarding of one data packet in the protocol data unit set; and obtaining the number of lost packets corresponding to the protocol data unit set based on the count value of the packet loss counter.

In an embodiment, when the packet loss counter counts the number of discarded data packets in the protocol data unit set, the method further includes: skipping, by the packet loss counter, counting a discarded data packet that is successfully transmitted.

In an embodiment, the method further includes: releasing or clearing the packet loss counter when discarding the protocol data unit set or the data packet; releasing or clearing the packet loss counter when the number of lost packets corresponding to the protocol data unit set does not reach or does not exceed the packet loss threshold, and transmission of the protocol data unit set and/or the data packet is completed; releasing or clearing the packet loss counter when the ratio of the number of lost packets corresponding to the protocol data unit set to the total number of data packets included in the protocol data unit set does not reach or does not exceed the packet loss ratio threshold, and transmission of the protocol data unit set and/or the data packet is completed; releasing or clearing the packet loss counter when a ratio of the count value of the counter to the total number of data packets included in the protocol data unit set reaches or exceeds the corresponding packet loss ratio threshold; or releasing or clearing the packet loss counter when the count value of the counter reaches or exceeds the packet loss threshold.

In an embodiment, the method further includes: setting the packet loss counter when there is a data packet that is successfully transmitted.

In an embodiment, when the determining basis used in the preset determining manner is the packet loss timer of the protocol data unit set, the method specifically includes: obtaining the packet loss timer corresponding to the protocol data unit set; and when the packet loss timer expires, discarding the protocol data unit set or the data packet; or when the packet loss timer expires, if transmission of the protocol data unit set or the data packet is not completed, discarding the protocol data unit set or the data packet.

In an embodiment, the method further includes: starting the packet loss timer when receiving a first data packet in the protocol data unit set.

In an embodiment, the method further includes: when transmission time of the protocol data unit set exceeds packet loss timing time of the packet loss timer, discarding the protocol data unit set or the data packet.

In an embodiment, the obtaining the packet loss timer corresponding to the protocol data unit set specifically includes: receiving fifth configuration information sent by a receiving end, where the fifth configuration information indicates the packet loss timer, and the receiving end is configured to receive the data packet; obtaining the packet loss timer preconfigured by the transmitting end; receiving, by using a protocol layer of the transmitting end, the packet loss timer sent by a higher layer of the transmitting end; or receiving sixth configuration information sent by a core network, where the sixth configuration information indicates the packet loss timer.

In an embodiment, the method further includes: releasing or clearing the packet loss timer when discarding the protocol data unit set or the data packet; releasing or clearing the packet loss timer when the packet loss timer does not expire, and transmission of the protocol data unit set and/or the data packet is completed; or releasing or clearing the packet loss timer when the packet loss timer expires.

In an embodiment, when the determining basis used in the preset determining manner is the number of lost packets and the packet loss timer corresponding to the protocol data unit set, the method specifically includes: obtaining a packet loss threshold corresponding to the protocol data unit set and the packet loss timer corresponding to the protocol data unit set; obtaining the number of lost packets corresponding to the protocol data unit set; and if the number of lost packets exceeds the packet loss threshold, and/or if transmission of the protocol data unit set or the data packet is not completed when the packet loss timer expires, discarding the protocol data unit set or the data packet; or if the number of lost packets exceeds the packet loss threshold, and/or if the packet loss timer expires, discarding the protocol data unit set or the data packet.

In an embodiment, that transmission of the protocol data unit set or the data packet is not completed specifically includes: there is a data packet in the protocol data unit set at the transmitting end.

In an embodiment, when the determining basis used in the preset determining manner is the first attribute information corresponding to the protocol data unit set and/or the second attribute information corresponding to the data packet, the method specifically includes: when the first attribute information corresponding to the protocol data unit set is associated with not allowing to be discarded, if a protocol data unit set having the first attribute information is discarded, discarding the protocol data unit set or the data packet; or when the second attribute information corresponding to the data packet is associated with not allowing to be discarded, if a data packet having the second attribute information is discarded, discarding the protocol data unit set or the data packet.

In an embodiment, the method further includes: obtaining seventh configuration information sent by a receiving end, where the seventh configuration information indicates the first attribute information corresponding to the protocol data unit set and/or the second attribute information corresponding to the data packet, and the receiving end is configured to receive the data packet; obtaining the first attribute information corresponding to the protocol data unit set and/or the second attribute information corresponding to the data packet that are/is preconfigured by the transmitting end; receiving, by using a protocol layer of the transmitting end, the first attribute information corresponding to the protocol data unit set and/or the second attribute information corresponding to the data packet that are/is sent by a higher layer of the transmitting end; or receiving eighth configuration information sent by a core network, where the eighth configuration information indicates the first attribute information corresponding to the protocol data unit set and/or the second attribute information corresponding to the data packet.

In an embodiment, when the determining basis used in the preset determining manner is the dependency relationship between the protocol data unit set and another protocol data unit set, the method specifically includes: obtaining that there is a dependency relationship between a first protocol data unit set and at least one second protocol data unit set; and based on the dependency relationship, if obtaining that the second protocol data unit set is discarded, discarding the first protocol data unit set or a data packet included in the first protocol data unit set; or based on the dependency relationship, if obtaining that a number of discarded second protocol data unit sets reaches a preset threshold, discarding the first protocol data unit set or a data packet included in the first protocol data unit set.

In an embodiment, the obtaining the at least one second protocol data unit set that has the dependency relationship with the first protocol data unit set specifically includes: receiving ninth configuration information sent by a receiving end, where the ninth configuration information indicates a dependency relationship identifier, and the receiving end is configured to receive the data packet transmitted by the transmitting end; obtaining a dependency relationship identifier preconfigured by the transmitting end; receiving, by using a protocol layer of the transmitting end, a dependency relationship identifier sent by a higher layer of the transmitting end; or receiving tenth configuration information sent by a core network, where the tenth configuration information indicates a dependency relationship identifier, and the dependency relationship identifier indicates another protocol data unit set interdependent with the protocol data unit set.

In an embodiment, the method further includes: receiving packet loss indication information sent by the receiving end or the higher layer of the transmitting end, where the packet loss indication information indicates the transmitting end to trigger discarding of the protocol data unit set or discarding of the data packet; and triggering discarding of the protocol data unit set or discarding of the data packet at the protocol layer.

In an embodiment, the if determining, according to the preset determining manner, to discard the protocol data unit set or the data packet included in the protocol data unit set, discarding the protocol data unit set or the data packet included in the protocol data unit set specifically includes: if the protocol layer of the transmitting end device determines, according to the preset determining manner, to discard the protocol data unit set or the data packet included in the protocol data unit set, discarding the protocol data unit set or the data packet.

In an embodiment, the method further includes: when a protocol layer entity of the transmitting end device determines to discard the protocol data unit set or the data packet, if the data packet of the protocol data unit set has been transmitted to a next layer corresponding to the protocol layer, sending, by the protocol layer entity, a notification message to a protocol layer entity of the next layer, where the notification message indicates the protocol layer entity of the next layer to discard the data packet.

Based on the same technical concept, an embodiment of this application further provides a data packet discarding method applied to a receiving end. The method includes: sending configuration information to a transmitting end, so that the transmitting end determines, based on at least one of the configuration information according to a preset determining manner, whether to discard a protocol data unit set or a data packet included in the protocol data unit set, where the configuration information includes at least one of a packet loss threshold, a packet loss ratio threshold, a packet loss timer, first attribute information corresponding to the protocol data unit set, second attribute information corresponding to the data packet, and a dependency relationship identifier.

In an example, the method further includes: configuring the configuration information at a granularity of a protocol layer entity; configuring the configuration information at a granularity of a DRB; configuring the configuration information at a granularity of the protocol data unit set; or configuring the configuration information at a granularity of a type of the protocol data unit set, where the type of the protocol data unit set is at least one of a priority of the protocol data unit set, an importance level of the protocol data unit set, and a sequence number of the protocol data unit set.

In an example, a data structure of the configuration information is a sequence structure.

Based on the same technical concept, an embodiment of this application further provides a data packet discarding method applied to a transmitting end. The method includes: receiving packet loss indication information sent by a receiving end, where the packet loss indication information indicates the transmitting end to trigger discarding of the protocol data unit set or discarding of the data packet; and triggering discarding of the protocol data unit set or discarding of the data packet in the protocol data unit set at a protocol layer, where the protocol data unit set includes at least one data packet.

Based on the same technical concept, an embodiment of this application further provides a data packet discarding method applied to a transmitting end. The method includes: receiving packet loss indication information sent by a receiving end, where the packet loss indication information indicates the transmitting end to trigger discarding of the protocol data unit set or discarding of the data packet; and triggering a protocol layer to perform the data packet discarding method according to any one of the foregoing embodiments.

Based on the same technical concept, an embodiment of this application further provides a transmitting end device, including: one or more processors; and one or more memories. The one or more memories store one or more computer programs, the one or more computer programs include instructions, and when the instructions are executed by the one or more processors, the transmitting end is enabled to perform one or more steps in any one of the foregoing methods.

Based on the same technical concept, an embodiment of this application further provides a communication system including a transmitting end device and a receiving end device, where the transmitting end device is configured to perform one or more steps in any one of the foregoing methods, and the receiving end is configured to receive the data packet in the protocol data unit set transmitted by the transmitting end.

Based on the same technical concept, an embodiment of this application further provides a computer-readable storage medium, the computer-readable storage medium stores computer-executable program instructions, and when the computer-executable program instructions are run on a computer, the computer or a processor is enabled to perform one or more steps in any one of the foregoing methods.

Based on the same technical concept, an embodiment of this application further provides a computer program product including instructions, the computer program product includes computer program code, and when the computer program code is run on a computer, the computer or a processor is enabled to perform one or more steps in any one of the foregoing methods.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. For example, the computer instructions may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures in the methods in the embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

The foregoing descriptions are merely specific implementations of embodiments of this application, but the protection scope of embodiments of this application is not limited thereto. Any variation or replacement within the technical scope disclosed in embodiments of this application shall fall within the protection scope of embodiments of this application. Therefore, the protection scope of embodiments of this application shall be subject to the protection scope of the claims.

## Claims

1. A data packet discarding method, applied to a transmitting end, wherein the method comprises:
determining, according to a preset determining manner, whether to discard a protocol data unit set or a data packet comprised in the protocol data unit set, wherein a determining basis used in the preset determining manner comprises at least one of a number of lost packets corresponding to the protocol data unit set, a packet loss timer of the protocol data unit set, first attribute information corresponding to the protocol data unit set, second attribute information corresponding to the data packet, and a dependency relationship between the protocol data unit set and another protocol data unit set, the attribute information is associated with allowing to be discarded or not allowing to be discarded, and the protocol data unit set comprises one or more data packets; and
if determining, according to the preset determining manner, to discard the protocol data unit set or the data packet comprised in the protocol data unit set, discarding the protocol data unit set or the data packet.

2. The method according to claim 1, wherein the first attribute information comprises at least one of a sequence number corresponding to the protocol data unit set, a total number of data packets comprised in the protocol data unit set, an importance level of the protocol data unit set, a priority of the protocol data unit set, and a dependency relationship of the protocol data unit set; and
the second attribute information comprises at least one of a data packet sequence number corresponding to the data packet, a position of the data packet in the protocol data unit set, an importance level of the data packet, and a priority of the data packet.

3. The method according to claim 1, wherein when the determining basis used in the preset determining manner is the number of lost packets corresponding to the protocol data unit set, the method specifically comprises:
obtaining a packet loss threshold corresponding to the protocol data unit set;
obtaining the number of lost packets corresponding to the protocol data unit set; and
if the number of lost packets reaches or exceeds the packet loss threshold, discarding the protocol data unit set or the data packet.

4. The method according to claim 3, wherein the obtaining a packet loss threshold corresponding to the protocol data unit set specifically comprises:
receiving first configuration information sent by a receiving end, wherein the first configuration information indicates the packet loss threshold, and the receiving end is configured to receive the data packet;
obtaining the packet loss threshold preconfigured by the transmitting end;
receiving, by using a protocol layer of the transmitting end, the packet loss threshold sent by a higher layer of the transmitting end; or
receiving second configuration information sent by a core network, wherein the second configuration information indicates the packet loss threshold.

5. The method according to claim 3 or 4, wherein when the transmitting end configures the packet loss threshold, the method further comprises:
configuring the packet loss threshold at a granularity of a protocol layer entity;
configuring the packet loss threshold at a granularity of a data radio bearer DRB;
configuring the packet loss threshold at a granularity of the protocol data unit set; or
configuring the packet loss threshold at a granularity of a type of the protocol data unit set, wherein the type of the protocol data unit set is at least one of a priority of the protocol data unit set, an importance level of the protocol data unit set, and a sequence number of the protocol data unit set.

6. The method according to claim 1, wherein when the determining basis used in the preset determining manner is the number of lost packets corresponding to the protocol data unit set, the method specifically comprises:
obtaining a packet loss ratio threshold corresponding to the protocol data unit set;
obtaining the number of lost packets corresponding to the protocol data unit set;
obtaining a packet loss ratio corresponding to the protocol data unit set based on a ratio of the number of lost packets to a total number of data packets comprised in the protocol data unit set; and
if the packet loss ratio reaches or exceeds the packet loss ratio threshold, discarding the protocol data unit set or the data packet.

7. The method according to claim 6, wherein the obtaining a packet loss ratio threshold corresponding to the protocol data unit set specifically comprises:
receiving third configuration information sent by a receiving end, wherein the third configuration information indicates the packet loss ratio threshold, and the receiving end is configured to receive the data packet;
obtaining the packet loss ratio threshold preconfigured by the transmitting end;
receiving, by using a protocol layer of the transmitting end, the packet loss ratio threshold sent by a higher layer of the transmitting end; or
receiving fourth configuration information sent by a core network, wherein the fourth configuration information indicates the packet loss ratio threshold.

8. The method according to claim 6 or 7, wherein when the transmitting end configures the packet loss ratio threshold, the method further comprises:
configuring the packet loss ratio threshold at a granularity of a protocol layer entity;
configuring the packet loss ratio threshold at a granularity of a DRB;
configuring the packet loss ratio threshold at a granularity of the protocol data unit set; or
configuring the packet loss ratio threshold at a granularity of a type of the protocol data unit set, wherein the type of the protocol data unit set is at least one of a priority of the protocol data unit set, an importance level of the protocol data unit set, and a sequence number of the protocol data unit set.

9. The method according to any one of claims 3 to 8, wherein the obtaining the number of lost packets corresponding to the protocol data unit set specifically comprises:
setting a packet loss counter, wherein the packet loss counter is configured to count a number of discarded data packets in the protocol data unit set;
adding 1 to a count value of the packet loss counter when obtaining discarding of one data packet in the protocol data unit set; and
obtaining the number of lost packets corresponding to the protocol data unit set based on the count value of the packet loss counter.

10. The method according to claim 9, wherein when the packet loss counter counts the number of discarded data packets in the protocol data unit set, the method further comprises:
skipping, by the packet loss counter, counting a discarded data packet that is successfully transmitted.

11. The method according to claim 9 or 10, wherein the method further comprises:
releasing or clearing the packet loss counter when discarding the protocol data unit set or the data packet;
releasing or clearing the packet loss counter when the number of lost packets corresponding to the protocol data unit set does not reach or does not exceed the packet loss threshold, and transmission of the protocol data unit set and/or the data packet is completed;
releasing or clearing the packet loss counter when the ratio of the number of lost packets corresponding to the protocol data unit set to the total number of data packets comprised in the protocol data unit set does not reach or does not exceed the packet loss ratio threshold, and transmission of the protocol data unit set and/or the data packet is completed;
releasing or clearing the packet loss counter when a ratio of the count value of the counter to the total number of data packets comprised in the protocol data unit set reaches or exceeds the corresponding packet loss ratio threshold; or
releasing or clearing the packet loss counter when the count value of the counter reaches or exceeds the packet loss threshold.

12. The method according to any one of claims 9 to 11, wherein the method further comprises:
setting the packet loss counter when there is a data packet that is successfully transmitted.

13. The method according to claim 1 or 2, wherein when the determining basis used in the preset determining manner is the packet loss timer of the protocol data unit set, the method specifically comprises:
obtaining the packet loss timer corresponding to the protocol data unit set; and
when the packet loss timer expires, discarding the protocol data unit set or the data packet; or
when the packet loss timer expires, if transmission of the protocol data unit set or the data packet is not completed, discarding the protocol data unit set or the data packet.

14. The method according to claim 1 or 2, wherein the method further comprises:
starting the packet loss timer when receiving a first data packet in the protocol data unit set.

15. The method according to claim 13 or 14, wherein the method further comprises:
when transmission time of the protocol data unit set exceeds packet loss timing time of the packet loss timer, discarding the protocol data unit set or the data packet.

16. The method according to any one of claims 13 to 15, wherein the obtaining the packet loss timer corresponding to the protocol data unit set specifically comprises:
receiving fifth configuration information sent by a receiving end, wherein the fifth configuration information indicates the packet loss timer, and the receiving end is configured to receive the data packet;
obtaining the packet loss timer preconfigured by the transmitting end;
receiving, by using a protocol layer of the transmitting end, the packet loss timer sent by a higher layer of the transmitting end; or
receiving sixth configuration information sent by a core network, wherein the sixth configuration information indicates the packet loss timer.

17. The method according to claim 1 or 2, wherein the method further comprises:
releasing or clearing the packet loss timer when discarding the protocol data unit set or the data packet;
releasing or clearing the packet loss timer when the packet loss timer does not expire, and transmission of the protocol data unit set and/or the data packet is completed; or
releasing or clearing the packet loss timer when the packet loss timer expires.

18. The method according to claim 1 or 2, wherein when the determining basis used in the preset determining manner is the number of lost packets and the packet loss timer corresponding to the protocol data unit set, the method specifically comprises:
obtaining a packet loss threshold corresponding to the protocol data unit set and the packet loss timer corresponding to the protocol data unit set;
obtaining the number of lost packets corresponding to the protocol data unit set; and
if the number of lost packets exceeds the packet loss threshold, and/or if transmission of the protocol data unit set or the data packet is not completed when the packet loss timer expires, discarding the protocol data unit set or the data packet; or
if the number of lost packets exceeds the packet loss threshold, and/or if the packet loss timer expires, discarding the protocol data unit set or the data packet.

19. The method according to any one of claims 13 to 18, wherein that the transmission of the protocol data unit set or the data packet is not completed specifically comprises:
there is a data packet in the protocol data unit set at the transmitting end.

20. The method according to claim 1 or 2, wherein when the determining basis used in the preset determining manner is the first attribute information corresponding to the protocol data unit set and/or the second attribute information corresponding to the data packet, the method specifically comprises:
when the first attribute information corresponding to the protocol data unit set is associated with not allowing to be discarded, if a protocol data unit set having the first attribute information is discarded, discarding the protocol data unit set or the data packet; or
when the second attribute information corresponding to the data packet is associated with not allowing to be discarded, if a data packet having the second attribute information is discarded, discarding the protocol data unit set or the data packet.

21. The method according to claim 20, wherein the method further comprises:
obtaining seventh configuration information sent by a receiving end, wherein the seventh configuration information indicates the first attribute information corresponding to the protocol data unit set and/or the second attribute information corresponding to the data packet, and the receiving end is configured to receive the data packet;
obtaining the first attribute information corresponding to the protocol data unit set and/or the second attribute information corresponding to the data packet that are/is preconfigured by the transmitting end;
receiving, by using a protocol layer of the transmitting end, the first attribute information corresponding to the protocol data unit set and/or the second attribute information corresponding to the data packet that are/is sent by a higher layer of the transmitting end; or
receiving eighth configuration information sent by a core network, wherein the eighth configuration information indicates the first attribute information corresponding to the protocol data unit set and/or the second attribute information corresponding to the data packet.

22. The method according to claim 1 or 2, wherein when the determining basis used in the preset determining manner is the dependency relationship between the protocol data unit set and another protocol data unit set, the method specifically comprises:
obtaining that there is a dependency relationship between a first protocol data unit set and at least one second protocol data unit set; and
based on the dependency relationship, if obtaining that the second protocol data unit set is discarded, discarding the first protocol data unit set or a data packet comprised in the first protocol data unit set; or
based on the dependency relationship, if obtaining that a number of discarded second protocol data unit sets reaches a preset threshold, discarding the first protocol data unit set or a data packet comprised in the first protocol data unit set.

23. The method according to claim 22, wherein the obtaining the at least one second protocol data unit set that has the dependency relationship with the first protocol data unit set specifically comprises:
receiving ninth configuration information sent by a receiving end, wherein the ninth configuration information indicates a dependency relationship identifier, and the receiving end is configured to receive the data packet transmitted by the transmitting end;
obtaining a dependency relationship identifier preconfigured by the transmitting end;
receiving, by using a protocol layer of the transmitting end, a dependency relationship identifier sent by a higher layer of the transmitting end; or
receiving tenth configuration information sent by a core network, wherein the tenth configuration information indicates a dependency relationship identifier, and the dependency relationship identifier indicates another protocol data unit set interdependent with the protocol data unit set.

24. The method according to any one of claims 1 to 23, wherein the method further comprises:
receiving packet loss indication information sent by the receiving end or the higher layer of the transmitting end, wherein the packet loss indication information indicates the transmitting end to trigger discarding of the protocol data unit set or discarding of the data packet; and
triggering discarding of the protocol data unit set or discarding of the data packet at the protocol layer.

25. The method according to any one of claims 1 to 24, wherein the if determining, according to the preset determining manner, to discard the protocol data unit set or the data packet comprised in the protocol data unit set, discarding the protocol data unit set or the data packet comprised in the protocol data unit set specifically comprises:
if the protocol layer of the transmitting end device determines, according to the preset determining manner, to discard the protocol data unit set or the data packet comprised in the protocol data unit set, discarding the protocol data unit set or the data packet.

26. The method according to claim 25, wherein the method further comprises:
when a protocol layer entity of the transmitting end device determines to discard the protocol data unit set or the data packet, if the data packet of the protocol data unit set has been transmitted to a next layer corresponding to the protocol layer, sending, by the protocol layer entity, a notification message to a protocol layer entity of the next layer, wherein the notification message indicates the protocol layer entity of the next layer to discard the data packet.

27. A data packet discarding method, applied to a transmitting end, wherein the method comprises:
receiving packet loss indication information sent by a receiving end or a higher layer of the transmitting end, wherein the packet loss indication information indicates discarding of a protocol data unit set or discarding of a data packet comprised in the protocol data unit set; and
triggering discarding of the protocol data unit set or discarding of the data packet, wherein the protocol data unit set comprises at least one data packet.

28. A data packet discarding method, applied to a transmitting end, wherein the method comprises:
receiving packet loss indication information sent by a receiving end, wherein the packet loss indication information indicates discarding of a protocol data unit set or discarding of a data packet comprised in the protocol data unit set; and
triggering a protocol layer to perform the data packet discarding method according to any one of claims 1 to 26.

29. A data packet discarding method, applied to a receiving end, wherein the method comprises:
sending configuration information to a transmitting end, so that the transmitting end determines, based on at least one of the configuration information according to a preset determining manner, whether to discard a protocol data unit set or a data packet comprised in the protocol data unit set, wherein the configuration information comprises at least one of a packet loss threshold, a packet loss ratio threshold, a packet loss timer, first attribute information corresponding to the protocol data unit set, second attribute information corresponding to the data packet, and a dependency relationship identifier.

30. The method according to claim 29, wherein the method further comprises:
configuring the configuration information at a granularity of a protocol layer entity;
configuring the configuration information at a granularity of a DRB;
configuring the configuration information at a granularity of the protocol data unit set; or
configuring the configuration information at a granularity of a type of the protocol data unit set, wherein the type of the protocol data unit set is at least one of a priority of the protocol data unit set, an importance level of the protocol data unit set, and a sequence number of the protocol data unit set.

31. The method according to claim 29 or 30, wherein a data structure of the configuration information is a sequence structure.

32. A transmitting end device, comprising:
one or more processors; and
one or more memories, wherein
the one or more memories store one or more computer programs, the one or more computer programs comprise instructions, and when the instructions are executed by the one or more processors, the transmitting end device is enabled to perform the method according to any one of claims 1 to 28.

33. A receiving end device, comprising:
one or more processors; and
one or more memories, wherein
the one or more memories store one or more computer programs, the one or more computer programs comprise instructions, and when the instructions are executed by the one or more processors, the receiving end device is enabled to perform the method according to either of claims 29 and 30.

34. A communication system, comprising a transmitting end device and a receiving end device, wherein the transmitting end device is configured to perform the method according to any one of claims 1 to 28, and the receiving end is configured to perform the method according to any one of claims 29 to 31.

35. A computer-readable storage medium, wherein the computer-readable storage medium stores computer-executable program instructions, and when the computer-executable program instructions are run on a computer, the computer is enabled to perform the method according to any one of claims 1 to 31.
